(19) 

Europäisches
Patentamt
European
Patent Office
Office européen
des brevets

(11) **EP 4 180 400 A1**

(12) # EUROPEAN PATENT APPLICATION
published in accordance with Art. 153(4) EPC

(43) Date of publication:
**17.05.2023 Bulletin 2023/20**

(21) Application number: **21837230.8**

(22) Date of filing: **05.07.2021**

(51) International Patent Classification (IPC):
*C03C 3/083* [(2006.01)]  *C03C 3/085* [(2006.01)]
*C03C 3/091* [(2006.01)]  *C03C 3/093* [(2006.01)]
*C03C 3/095* [(2006.01)]  *C03C 3/097* [(2006.01)]
*C03C 21/00* [(2006.01)]

(52) Cooperative Patent Classification (CPC):
**C03C 3/083; C03C 3/085; C03C 3/091;
C03C 3/093; C03C 3/095; C03C 3/097; C03C 21/00**

(86) International application number:
**PCT/JP2021/025375**

(87) International publication number:
**WO 2022/009850 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.07.2020 JP 2020119445**

(71) Applicant: **AGC INC.**
**Chiyoda-ku,**
**Tokyo 1008405 (JP)**

(72) Inventors:
• **MAEDA, Eriko**
**Tokyo 100-8405 (JP)**
• **KANEHARA, Kazuki**
**Tokyo 100-8405 (JP)**
• **AKIBA, Shusaku**
**Tokyo 100-8405 (JP)**

(74) Representative: **Müller-Boré & Partner**
**Patentanwälte PartG mbB**
**Friedenheimer Brücke 21**
**80639 München (DE)**

(54) **GLASS AND CHEMICALLY STRENGTHENED GLASS**

(57)  The present invention pertains to a glass having a specific composition range and a parameter M of 20 or less which is obtained from equation. $M=-1.15\times[SiO_2]-1.73\times[Al_2O_3]+0.155\times[Li_2O]+0.74\times[Na_2O]-4.75\times[K_2O]-2.1\times[B_2O_3]-2.17\times[P_2O_5]+3.25\times[MgO]-2.0\times[ZnO]-13.3\times[ZrO_2]-0.80\times[Y_2O_3]+120.$

*FIG. 1*

EP 4 180 400 A1

**Description**

TECHNICAL FIELD

The present invention relates to a glass and a chemically strengthened glass.

BACKGROUND ART

In recent years, a cover glass made of a chemically strengthened glass has been used for a purpose of protecting a display device such as a mobile phone, a smartphone, or a tablet terminal and improving an appearance thereof.

The chemically strengthened glass tends to have a higher strength as a surface compressive stress (value) (CS) or a depth of a compressive stress layer (DOL) increases. On the other hand, an internal tensile stress (CT) is generated inside the glass so as to keep balance with the surface compressive stress, and thus, the CT increases as the CS and the DOL increase. When a glass having a larger CT is cracked, the number of broken pieces increases, and a risk of scattering the broken pieces increases.

Patent Literature 1 describes that a surface compressive stress (CS) can be increased while reducing an internal tensile stress (CT) by forming a stress profile represented by a bent line by a two-stage chemical strengthening treatment.

Further, Patent Literature 2 discloses a lithium aluminosilicate glass in which a relatively large surface compressive stress and a depth of a compressive stress layer are obtained by a two-stage chemical strengthening treatment. In the lithium aluminosilicate glass, both CS and DOL can be increased while reducing CT by a two-stage chemical strengthening treatment using a sodium salt and a potassium salt.

In the two-stage strengthening treatment, a treatment of forming a deep compressive stress layer with a relatively small surface compressive stress value by ion exchange between sodium ions having a relatively small ion radius and lithium ions in the glass and a treatment of forming a large compressive stress in a vicinity of a surface by ion exchange between potassium ions having a relatively large ion radius and sodium ions in the glass are generally combined.

Patent Literature 3 describes that a more complicated stress profile can be formed by three-stage chemical strengthening.

It can be said that, in addition to general two-stage chemical strengthening, CS and DOL are further increased while reducing an internal tensile stress CT by performing a treatment of pulling back alkali ions having a large ion radius in a glass by ion exchange with alkali ions having a small ion radius or a treatment of relaxing a stress generated in the glass by a heat treatment.

CITATION LIST

PATENT LITERATURE

Patent Literature 1: U.S. Patent Publication No. 2015/0259244
Patent Literature 2: JP2013-520388T
Patent Literature 3: JP2019-517985T

SUMMARY OF INVENTION

TECHNICAL PROBLEM

However, a three-stage strengthening treatment is complicated. An object of the present invention is to provide a glass capable of obtaining a chemically strengthened glass in which CS and DOL are large and CT is reduced by a relatively simple strengthening treatment. Another object of the present invention is to provide a chemically strengthened glass in which CS and DOL are large and CT is reduced by a relatively simple strengthening treatment.

SOLUTION TO PROBLEM

Potassium ions having a large ion radius have a slower diffusion rate in a glass than sodium ions having a small ion radius, and thus, DOL is generally reduced when an ion exchange treatment is performed using the potassium ions. However, the present inventors have found that the diffusion rate of potassium ions can be made relatively higher than a diffusion rate of sodium ions in some cases by adjusting a glass composition. In a case where the ion exchange treatment is performed using a glass having such a composition, a stress profile different from that of the related art can be formed. Accordingly, the present invention has been completed, considering that a more complicated stress profile in which CS and DOL are larger than those in the related art and CT is reduced can be obtained by a relatively simple two-stage strengthening treatment.

The present invention provides a glass including, in terms of mole percentage based on oxides:

52% to 70% of $SiO_2$;
14% to 25% of $Al_2O_3$;
10% to 18% of $Li_2O$;
1% to 7% of $Na_2O$;
0.1% to 5% of $K_2O$;
0% to 10% of $B_2O_3$;
0% to 5% of $P_2O_5$;
0% to 5% of MgO;
0% to 5% of ZnO;
0% to 2% of $ZrO_2$; and
0% to 5% of $Y_2O_3$,
in which a parameter M is 20 or less, the parameter M being determined by the following formula,

$$M = -1.15 \times [SiO_2] - 1.73 \times [Al_2O_3] + 0.155 \times [Li_2O] + 0.74 \times [Na_2O] - 4.75 \times [K_2O] - 2.1 \times [B_2O_3] - 2.17 \times [P_2O_5] + 3.25 \times [MgO] - 2.0 \times [ZnO] - 13.3 \times [ZrO_2] - 0.80 \times [Y_2O_3] + 120$$

provided that $[SiO_2]$, $[Al_2O_3]$, $[Li_2O]$, $[Na_2O]$, $[K_2O]$, $[B_2O_3]$, $[P_2O_5]$, $[MgO]$, $[ZnO]$, $[ZrO_2]$, and $[Y_2O_3]$ are contents, in terms of mole percentage, of $SiO_2$, $Al_2O_3$, $Li_2O$, $Na_2O$, $K_2O$, $B_2O_3$, $P_2O_5$, MgO, ZnO, $ZrO_2$, and $Y_2O_3$, respectively.

In the glass of the present invention, a parameter D is preferably 1200 or more, the parameter D being determined by the following formula based on $[SiO_2]$, $[Al_2O_3]$, $[Li_2O]$, $[Na_2O]$, $[K_2O]$, $[B_2O_3]$, $[P_2O_5]$, $[MgO]$, $[ZnO]$, $[ZrO_2]$, and $[Y_2O_3]$.

$$D = -943 \times [SiO_2] - 859 \times [Al_2O_3] - 998 \times [Li_2O] - 991 \times [Na_2O] - 1013 \times [K_2O] - 949 \times [B_2O_3] - 941 \times [P_2O_5] - 687 \times [MgO] - 956 \times [ZnO] - 1516 \times [ZrO_2] - 823 \times [Y_2O_3] + 95174$$

In the glass of the present invention, a parameter E is preferably 500 or more, the parameter E being determined by the following formula based on $[SiO_2]$, $[Al_2O_3]$, $[Li_2O]$, $[Na_2O]$, $[K_2O]$, $[B_2O_3]$, $[P_2O_5]$, $[MgO]$, $[ZnO]$, $[ZrO_2]$, and $[Y_2O_3]$.

$$E = 539 \times [SiO_2] + 527 \times [Al_2O_3] + 587 \times [Li_2O] + 467 \times [Na_2O] + 578 \times [K_2O] + 510 \times [B_2O_3] + 516 \times [P_2O_5] + 442 \times [MgO] + 502 \times [ZnO] + 850 \times [ZrO_2] + 546 \times [Y_2O_3] - 53476$$

The present invention provides a glass including, in terms of mole percentage based on oxides:

52% to 70% of $SiO_2$;
14% to 25% of $Al_2O_3$;
10% to 18% of $Li_2O$;
1% to 7% of $Na_2O$; and
0.1% to 5% of $K_2O$,
in which a surface compressive stress value $CS_0(Na)$ generated when the glass having a sheet thickness of 700 $\mu m$ is immersed in $NaNO_3$ at 380°C for 4 hours is 500 MPa or more,
a surface compressive stress value $CS_0(K)$ generated when the glass having a sheet thickness of 700 $\mu m$ is immersed in $KNO_3$ at 380°C for 4 hours is 1200 MPa or more,
a depth of a compressive stress layer DOL(K) generated when the glass having a sheet thickness of 700 $\mu m$ is immersed in $KNO_3$ at 380°C for 4 hours is 3 $\mu m$ or more, and

a ratio DOL(Na) / DOL(K) of a depth of a compressive stress layer DOL(Na) generated when the glass having a sheet thickness of 700 $\mu$m is immersed in $NaNO_3$ at 380°C for 4 hours to the DOL(K) is 35 or less.

In the glass of the present invention, a compressive stress value $CS_{50}$(Na) at a depth of 50 $\mu$m from a surface is preferably 170 MPa or more, the compressive stress value $CS_{50}$(Na) being generated when the glass having a sheet thickness of 700 $\mu$m is immersed in $NaNO_3$ at 380°C for 4 hours.

In the glass of the present invention, a devitrification temperature is preferably 1350°C or lower.

In the glass of the present invention, a temperature T2 at which a viscosity of the glass is $10^2$ dPa·s is preferably 1750°C or lower.

In the glass of the present invention, a DSC exothermic peak temperature measured by the following test method is preferably higher than a glass transition point by 150°C or more.

Test Method:

About 70 mg of glass is crushed, ground in an agate mortar, and measured using a differential scanning calorimeter (DSC) from room temperature to 1200°C at a temperature rising rate of 10°C/min.

In the glass of the present invention, a value of S determined by the following formula is preferably 0.4 or less:

$$ S = -P_{Li} \times \log(P_{Li}) - P_{Na} \times \log(P_{Na}) - P_K \times \log(P_K) $$

in which, $P_{Li}$ = [Li$_2$O] / ([Li$_2$O] + [Na$_2$O] + [K$_2$O]),

$P_{Na}$ = [Na$_2$O] / ([Li$_2$O] + [Na$_2$O] + [K$_2$O]), and

$P_K$ = [K$_2$O] / ([Li$_2$O] + [Na$_2$O] + [K$_2$O]),

provided that [Li$_2$O], [Na$_2$O], and [K$_2$O] are contents, in terms of mole percentage, of Li$_2$O, Na$_2$O, and K$_2$O, respectively.

The present invention provides a chemically strengthened glass having a surface compressive stress value of 400 MPa or more, in which, when a profile of a Na$_2$O concentration is made in a depth direction from a surface toward a sheet thickness center, a depth at which the Na$_2$O concentration is maximum is 1 $\mu$m or more, and a base composition of the chemically strengthened glass includes, in terms of mole percentage based on oxides:

52% to 70% of $SiO_2$;

14% to 25% of $Al_2O_3$;

10% to 18% of $Li_2O$;

1% to 7% of $Na_2O$; and

0.1% to 5% of $K_2O$.

In the chemically strengthened glass of the present invention, a compressive stress value $CS_{50}$ at a depth of 50 $\mu$m from the surface is preferably 90 MPa or more.

In the chemically strengthened glass of the present invention, an internal tensile stress value CT is preferably 70.6 MPa or less.

In the chemically strengthened glass of the present invention, a surface compressive stress value $CS_0$ is preferably 800 MPa or more.

In the chemically strengthened glass of the present invention, a hopping frequency is preferably $10^{2.5}$ or more.

ADVANTAGEOUS EFFECTS OF INVENTION

According to the present invention, a chemically strengthened glass having a complicated stress profile in which CS and DOL are large and CT is reduced can be obtained by a relatively simple strengthening treatment.

BRIEF DESCRIPTION OF DRAWINGS

FIG. 1 shows an example of a stress profile of a chemically strengthened glass according to an embodiment of the present invention.

FIG. 2 shows an example of a stress profile of a chemically strengthened glass according to an embodiment of the present invention.

FIG. 3 shows an electrode pattern used for measurement of a hopping frequency.

DESCRIPTION OF EMBODIMENTS

Hereinafter, a glass according to an embodiment of the present invention will be described in detail, but the present invention is not limited to the following embodiment, and can be optionally modified and implemented without departing from the gist of the present invention.

In the present specification, the term "chemically strengthened glass" refers to a glass after being subjected to a chemical strengthening treatment. The term "glass for chemical strengthening" refers to a glass before being subjected to a chemical strengthening treatment.

In the present specification, a glass composition of the glass for chemical strengthening may be referred to as a base composition of the chemically strengthened glass. In the chemically strengthened glass, a compressive stress layer is generally formed on a glass surface portion by ion exchange, and thus, a glass composition of a portion not subjected to ion exchange coincides with a base composition of the chemically strengthened glass. In the chemically strengthened glass, a glass composition at a depth of 1/2 of a sheet thickness t is the base composition of the chemically strengthened glass except for a case where an extreme ion exchange treatment was performed.

In the present specification, the glass composition is expressed in terms of mole percentage based on oxides, and mol% is simply expressed as "%". In addition, the expression "to" indicating a numerical range is used to include the numerical values described therebefore and thereafter as the lower limit value and the upper limit value.

In the glass composition, "not substantially contained" means that a component is not contained other than inevitable impurities contained in a raw material or the like, that is, the component is not intentionally contained. Specifically, a content of components other than a coloring component is, for example, less than 0.1 mol%.

In the present specification, the term "stress profile" is a pattern representing a compressive stress value with the depth from a glass surface as a variable. A negative compressive stress value means a tensile stress.

In the present specification, a property that broken pieces are likely to scatter when a glass is broken may be referred to as "friability".

In the present specification, the term "stress profile" can be measured by a method using an optical waveguide surface stress meter and a scattered light photoelastic stress meter in combination, or a method using a scattered light photoelastic stress meter.

It is known that the optical waveguide surface stress meter can accurately measure the stress of the glass in a short time. Examples of the optical waveguide surface stress meter include FSM-6000 manufactured by Orihara Industrial Co., Ltd. However, in principle, the optical waveguide surface stress meter can measure the stress only when the refractive index decreases from a sample surface toward the inside. In the chemically strengthened glass, a layer obtained by substituting sodium ions inside the glass with external potassium ions has a refractive index that decreases from the sample surface toward the inside, and thus the stress can be measured by the optical waveguide surface stress meter. However, a stress of the layer obtained by substituting lithium ions inside the glass with external sodium ions cannot be correctly measured by the optical waveguide surface stress meter.

The stress can be measured by the method using the scattered light photoelastic stress meter, regardless of a refractive index distribution. Examples of the scattered light photoelastic stress meter include SLP-1000 and SLP-2000 manufactured by Orihara Industrial Co., Ltd. However, the scattered light photoelastic stress meter is likely to be affected by surface scattering, and may not accurately measure a stress in a vicinity of a surface. By using these two types of measuring devices in combination, accurate stress measurement can be performed.

<Glass>

The glass according to the embodiment of the present invention (hereinafter, sometimes referred to as "the present glass") has a relatively deep K ion diffusion depth due to ion exchange between K ions entering from a glass surface and Na ions in the glass, and thus is easily chemically strengthened. In addition, the present glass is suitable for a glass for chemical strengthening because an appropriate stress profile is easily obtained.

A surface compressive stress value $CS_0(Na)$ generated when the present glass having a sheet thickness of 700 $\mu$m is immersed in $NaNO_3$ at 380°C for 4 hours is preferably 500 MPa or more, more preferably 520 MPa or more, still more preferably 550 MPa or more, and particularly preferably 600 MPa or more. When $CS_0(Na)$ is equal to or greater than the above value, it is easy to sufficiently increase a compressive stress when the present glass is subjected to a strengthening treatment using sodium ions. In order to prevent severe fracture, $CS_0(Na)$ is preferably 1000 MPa or less, and more preferably 800 MPa or less. Here, "the present glass having a sheet thickness of 700 $\mu$m" means "the present glass in the case of having a sheet thickness of 700 $\mu$m". That is, the shape and the sheet thickness of the present glass are not limited at all by the above description. A specific preferred shape and sheet thickness of the present glass will be described in detail later.

A surface compressive stress value $CS_0(K)$ generated when the present glass having a sheet thickness of 700 $\mu$m is immersed in $KNO_3$ at 380°C for 4 hours is preferably 1200 MPa or more, more preferably 1230 MPa or more, and still more preferably 1250 MPa or more. When $CS_0(K)$ is equal to or greater than the above value, it is easy to sufficiently increase a compressive stress when the present glass is subjected to a strengthening treatment using potassium ions. In order to prevent severe fracture, $CS_0(K)$ is preferably 1800 MPa or less, and more preferably 1600 MPa or less.

A depth of a compressive stress layer DOL(K) generated when the present glass having a sheet thickness of 700 $\mu$m is immersed in $KNO_3$ at 380°C for 4 hours is preferably 3 $\mu$m or more, more preferably 5 $\mu$m or more, and still more preferably 6.5 $\mu$m or more. When DOL(K) is equal to or greater than the above value, a diffusion depth of potassium ions during chemically strengthening the present glass tends to be sufficiently large. DOL(K) is preferably 18 $\mu$m or less, and more preferably 16 $\mu$m or less, from the viewpoint of ease of stress profile design.

A ratio DOL(Na) / DOL(K) of a depth of a compressive stress layer DOL(Na) generated when the present glass having a sheet thickness of 700 $\mu$m is immersed in $NaNO_3$ at 380°C for 4 hours to the DOL(K) is preferably 35 or less, more preferably 30 or less, still more preferably 25 or less, yet still more preferably 20 or less, particularly preferably 18 or less, further particularly preferably 17 or less, even still more preferably 16 or less, and most preferably 15 or less. When DOL(Na) / DOL (K) is equal to or less than the above value, a diffusion rate of potassium ions with respect to a diffusion rate of sodium ions during chemical strengthening is relatively large and the balance is improved, and thus a complicated stress profile is easily obtained. From the viewpoint of increasing diffusion of the sodium ions, DOL(Na) / DOL(K) is preferably 5 or more, more preferably 7 or more, and particularly preferably 8 or more.

A compressive stress value $CS_{50}(Na)$ at a depth of 50 $\mu$m from a surface, which is generated when the present glass having a sheet thickness of 700 $\mu$m is immersed in $NaNO_3$ at 380°C for 4 hours, is preferably 170 MPa or more, more preferably 190 MPa or more, and still more preferably 200 MPa or more. When $CS_{50}(Na)$ is within the above range, it is easy to increase the compressive stress inside the glass to improve the strength during chemically strengthening the present glass. In order to prevent severe fracture, $CS_{50}(Na)$ is preferably 500 MPa or less, and more preferably 400 MPa or less.

A compressive stress value $CS_{90}(Na)$ at a depth of 90 $\mu$m from the surface, which is generated when the present glass having a sheet thickness of 700 $\mu$m is immersed in $NaNO_3$ at 380°C for 4 hours, is preferably 0 MPa or more, more preferably 0.5 MPa or more, still more preferably 5 MPa or more, yet still more preferably 10 MPa or more, and particularly preferably 15 MPa or more. When $CS_{90}(Na)$ is within the above range, it is easy to increase the compressive stress inside the glass to improve the strength during chemically strengthening the present glass. In order to prevent severe fracture, $CS_{90}(Na)$ is preferably 200 MPa or less, more preferably 150 MPa or less, and still more preferably 100 MPa or less.

The present glass is lithium aluminosilicate glass.

Specifically, the present glass preferably contains, in terms of mole percentage based on oxides:

52% to 70% of $SiO_2$;
14% to 25% of $Al_2O_3$; and
10% to 18% of $Li_2O$.

In addition, the present glass preferably contains:

1% to 7% of $Na_2O$;
0.1% to 5% of $K_2O$;
0% to 10% of $B_2O_3$;
0% to 5% of $P_2O_5$;
0% to 5% of MgO;
0% to 5% of ZnO;
0% to 2% of $ZrO_2$; and
0% to 5% of $Y_2O_3$.

In the present glass, a parameter M is preferably 20 or less, the parameter M being determined by the following formula based on contents $[SiO_2]$, $[Al_2O_3]$, $[Li_2O]$, $[Na_2O]$, $[K_2O]$, $[B_2O_3]$, $[P_2O_5]$, $[MgO]$, $[ZnO]$, $[ZrO_2]$, and $[Y_2O_3]$ of $SiO_2$, $Al_2O_3$, $Li_2O$, $Na_2O$, $K_2O$, $B_2O_3$, $P_2O_5$, MgO, ZnO, $ZrO_2$, and $Y_2O_3$ in terms of mole percentage. A value of M is more preferably 18 or less, still more preferably 17 or less, particularly preferably 16 or less, further particularly preferably 15 or less, even still more preferably 13 or less, and most preferably 11 or less.

$$M = -1.15 \times [SiO_2] - 1.73 \times [Al_2O_3] + 0.155 \times [Li_2O] + 0.74 \times [Na_2O] - 4.75 \times [K_2O] - 2.1 \times [B_2O_3] - 2.17 \times [P_2O_5] + 3.25 \times [MgO] - 2.0 \times [ZnO] - 13.3 \times [ZrO_2] - 0.80 \times [Y_2O_3] + 120$$

M is a parameter related to a ratio of a diffusion rate of Na ions to a diffusion rate of K ions. When the value of M is within the above range, the ratio of the diffusion rate of Na ions to the diffusion rate of K ions tends to be small. In order to increase the compressive stress value $CS_{50}$ at a depth of 50 μm from the surface, the value of the parameter M is preferably 2 or more, more preferably 5 or more, and still more preferably 7 or more.

In addition, the present glass has the above preferable composition range, and the parameter M is 20 or less, and thus, the ratio of the diffusion rate of Na ions to the diffusion rate of K ions is adjusted to an appropriate range while having a composition suitable for chemical strengthening. Accordingly, it is easy to obtain a chemically strengthened glass in which CS and DOL are large and CT is reduced by a relatively simple strengthening treatment.

A parameter D obtained by the following formula is preferably 1200 or more. A value of D is more preferably 1230 or more, still more preferably 1250 or more, particularly preferably 1300 or more, even still more preferably 1350 or more, and most preferably 1450 or more.

$$D = -943 \times [SiO_2] - 859 \times [Al_2O_3] - 998 \times [Li_2O] - 991 \times [Na_2O] - 1013 \times [K_2O] - 949 \times [B_2O_3] - 941 \times [P_2O_5] - 687 \times [MgO] - 956 \times [ZnO] - 1516 \times [ZrO_2] - 823 \times [Y_2O_3] + 95174$$

D is a parameter related to a compressive stress value due to diffusion of K ions. When the value of D is within the above range, a diffusion rate of K ions tends to increase. In order to reduce CT, the value of D is preferably 1950 or less, more preferably 1800 or less, and still more preferably 1600 or less.

A parameter E is preferably 500 or more, the parameter E being determined by the following formula based on $[SiO_2]$, $[Al_2O_3]$, $[Li_2O]$, $[Na_2O]$, $[K_2O]$, $[B_2O_3]$, $[P_2O_5]$, $[MgO]$, $[ZnO]$, $[ZrO_2]$, and $[Y_2O_3]$. A value of the parameter E is more preferably 520 or more, still more preferably 550 or more, particularly preferably 570 or more, even still more preferably 600 or more, and most preferably 650 or more. $E = 539 \times [SiO_2] + 527 \times [Al_2O_3] + 587 \times [Li_2O] + 467 \times [Na_2O] + 578 \times [K_2O] + 510 \times [B_2O_3] + 516 \times [P_2O_5] + 442 \times [MgO] + 502 \times [ZnO] + 850 \times [ZrO_2] + 546 \times [Y_2O_3] - 53476$

E is a parameter related to a compressive stress value due to diffusion of Na ions. When the value of E is within the above range, a diffusion rate of Na ions tends to decrease. In order to reduce CT, the value of E is preferably 1000 or less, and more preferably 800 or less.

Hereinafter, a preferable glass composition will be described.

$SiO_2$ is a component constituting a network of a glass. $SiO_2$ is a component for increasing chemical durability, and is a component for reducing occurrence of cracks when the glass surface is scratched.

In order to improve the chemical durability, a content of $SiO_2$ is preferably 52% or more, more preferably 56% or more, still more preferably 60% or more, yet still more preferably 63% or more, and particularly preferably 65% or more. In order to improve meltability during glass production, the content of $SiO_2$ is preferably 70% or less, more preferably 68% or less, and still more preferably 65% or less.

$Al_2O_3$ is an effective component from the viewpoint of improving ion exchange performance during chemical strengthening and increasing a surface compressive stress after strengthening.

In order to improve chemical durability and chemical strengthening properties, a content of $Al_2O_3$ is preferably 14% or more, more preferably 16% or more, still more preferably 18% or more, and particularly preferably 20% or more. On the other hand, if the content of $Al_2O_3$ is too large, crystals may easily grow during melting. In order to prevent a decrease in yield due to devitrification defects, the content of $Al_2O_3$ is preferably 25% or less, more preferably 23% or less, and still more preferably 21% or less.

Both $SiO_2$ and $Al_2O_3$ are components for stabilizing a structure of a glass. In order to reduce brittleness, a total content of $SiO_2$ and $Al_2O_3$ is preferably 75% or more, more preferably 77% or more, and still more preferably 79% or more.

Both $SiO_2$ and $Al_2O_3$ tend to increase a melting temperature of the glass. Therefore, in order to facilitate melting of the glass, the total content of $SiO_2$ and $Al_2O_3$ is preferably 90% or less, more preferably 87% or less, still more preferably 85% or less, and particularly preferably 82% or less.

$Li_2O$ is a component for forming a surface compressive stress by ion exchange, and is a component for improving meltability of a glass. When the chemically strengthened glass (glass for chemical strengthening) contains $Li_2O$, a stress profile with a large surface compressive stress and a large compressive stress layer is obtained by a method of ion-exchanging Li ions on the glass surface to Na ions, and further ion-exchanging Na ions to K ions.

In order to increase the surface compressive stress during chemical strengthening, a content of $Li_2O$ is preferably 10% or more, more preferably 11% or more, still more preferably 13% or more, and particularly preferably 15% or more.

On the other hand, if the content of $Li_2O$ is too large, a crystal growth rate during glass forming increases, and a problem of yield reduction due to devitrification defects may increase. In order to prevent devitrification in a glass production process, the content of $Li_2O$ is preferably 18% or less, more preferably 16% or less, still more preferably 14% or less, and particularly preferably 12% or less.

Neither Na$_2$O nor K$_2$O is essential, but Na$_2$O and K$_2$O are components for improving the meltability of the glass and reducing the crystal growth rate of the glass. In order to improve the ion exchange performance, the present glass preferably contains at least one of Na$_2$O and K$_2$O.

Na$_2$O is a component forming a surface compressive stress layer in a chemical strengthening treatment using a potassium salt, and is a component capable of improving meltability of a glass. In order to obtain the effect, a content of Na$_2$O is preferably 1% or more, more preferably 2% or more, and still more preferably 3% or more. On the other hand, if the content of Na$_2$O is too large, it is difficult to increase a compressive stress of a relatively deep portion from the surface by chemical strengthening. From this viewpoint, the content is preferably 7% or less, more preferably 5% or less, and still more preferably 3% or less.

The present glass may contain K$_2$O for a purpose of, for example, preventing devitrification in the glass production process. When K$_2$O is contained in the present glass, a content of K$_2$O is preferably 0.1% or more, more preferably 0.15% or more, and particularly preferably 0.2% or more. In order to further prevent devitrification, the content of K$_2$O is preferably 0.5% or more, and more preferably 1.2% or more. On the other hand, when the glass contains a large amount of K, brittleness or reverse exchange during strengthening may cause a decrease in surface layer stress. From this viewpoint, the content of K$_2$O is preferably 5% or less, more preferably 3% or less, still more preferably 1% or less, and particularly preferably 0.5% or less.

In order to increase the meltability of the glass, a total content ([Na$_2$O] + [K$_2$O]) of Na$_2$O and K$_2$O is preferably 3% or more, more preferably 3.5% or more, still more preferably 4% or more, and particularly preferably 4.5% or more. If ([Na$_2$O] + [K$_2$O]) is too large, the surface compressive stress value tends to decrease, and thus, ([Na$_2$O] + [K$_2$O]) is preferably 10% or less, more preferably 8% or less, still more preferably 7% or less, and particularly preferably 6% or less.

The content of Na$_2$O is preferably larger than the content of K$_2$O. This is because K$_2$O easily increases a surface resistivity.

In order to reduce the surface resistivity, a ratio $P_{Li}$ = [Li$_2$O] / ([Li$_2$O] + [Na$_2$O] + [K$_2$O]) of the content of Li$_2$O to a total content of Li$_2$O, Na$_2$O, and K$_2$O is preferably 0.4 or more, more preferably 0.5 or more, and still more preferably 0.6 or more. Further, in order to prevent occurrence of devitrification during melting of the glass, $P_{Li}$ is preferably 0.9 or less, and particularly preferably 0.8 or less.

In order to prevent devitrification, a ratio $P_{Na}$ = [Na$_2$O] / ([Li$_2$O] + [Na$_2$O] + [K$_2$O]) of the content of Na$_2$O to the total content of Li$_2$O, Na$_2$O, and K$_2$O is preferably 0.1 or more, and more preferably 0.2 or more. In order to decrease the surface resistivity, $P_{Na}$ is preferably 0.5 or less, and more preferably 0.4 or less.

In order to decrease the surface resistivity, a ratio $P_K$ = [K$_2$O] / ([Li$_2$O] + [Na$_2$O] + [K$_2$O]) of the content of K$_2$O to the total content of Li$_2$O, Na$_2$O, and K$_2$O is preferably 0.3 or less, and more preferably 0.2 or less.

A value of a parameter S represented by the following formula is preferably 0.4 or less, more preferably 0.37 or less, still more preferably 0.35 or less, and particularly preferably 0.34 or less.

$$S = -P_{Li} \times \log(P_{Li}) - P_{Na} \times \log(P_{Na}) - P_K \times \log(P_K)$$

The smaller the value of the parameter S is, the more biased contents of Li$_2$O, Na$_2$O, and K$_2$O are. As the value of S is smaller, conductivity of the glass tends to be better, and the surface resistivity tends to be smaller. The value of S is preferably 0.15 or more, and more preferably 0.2 or more, from the viewpoint of facilitating progress of ion exchange.

MgO, CaO, SrO, BaO, and ZnO are not essential, but from the viewpoint of enhancing stability of a glass, the present glass may contain any one or more of these. When the present glass contains any one or more of MgO, CaO, SrO, BaO, and ZnO, a total content [MgO] + [CaO] + [SrO] + [BaO] + [ZnO] is preferably 0.1% or more, and more preferably 0.2% or more. In order to maintain high CS, the total content thereof is preferably 5% or less, more preferably 2% or less, still more preferably 1.5% or less, and yet still more preferably 1% or less.

In order to reduce viscosity during dissolution, the present glass may contain MgO. When the present glass contains MgO, a content thereof is preferably 1% or more, more preferably 2% or more, and still more preferably 3% or more. On the other hand, if the content of MgO is too large, it is difficult to enlarge the compressive stress layer during the chemical strengthening treatment. The content of MgO is preferably 5% or less, more preferably 4% or less, still more preferably 3% or less, and particularly preferably 2% or less.

CaO is a component for improving meltability of a glass. The present glass may contain CaO. When the present glass contains CaO, a content thereof is preferably 0.1% or more, more preferably 0.15% or more, and still more preferably 0.5% or more. On the other hand, if the content of CaO is excessive, it is difficult to increase the compressive stress value during the chemical strengthening treatment. The content of CaO is preferably 5% or less, more preferably 3% or less, still more preferably 1% or less, and typically 0.5% or less.

ZnO is a component for improving meltability of a glass. The present glass may contain ZnO. When the present glass contains ZnO, a content thereof is preferably 0.2% or more, and more preferably 0.5% or more. In order to increase weather resistance of the glass, the content of ZnO is preferably 5% or less, more preferably 3% or less, and still more preferably less than 1%.

ZnO, SrO, and BaO tend to deteriorate chemical strengthening properties. In order to facilitate chemical strengthening of the glass, a total content of [ZnO] + [SrO] + [BaO] is preferably 3% or less, more preferably less than 1%, and still more preferably 0.5% or less. It is particularly preferable that ZnO, SrO, and BaO are not substantially contained.

The present glass may not contain $ZrO_2$. From the viewpoint of increasing the surface compressive stress of the chemically strengthened glass, the present glass preferably contains $ZrO_2$. A content of $ZrO_2$ is preferably 0.1% or more, more preferably 0.15% or more, still more preferably 0.2% or more, particularly preferably 0.25% or more, and even still more preferably 0.3% or more. On the other hand, if the content of $ZrO_2$ is too large, devitrification defects are likely to occur, and it is difficult to increase the compressive stress value during the chemical strengthening treatment. The content of $ZrO_2$ is preferably 2% or less, more preferably 1.5% or less, still more preferably 1% or less, and particularly preferably 0.8% or less.

In order to increase a fracture toughness value, the present glass preferably contains any one or more of $Y_2O_3$, $La_2O_3$, and $ZrO_2$ in a total amount of 0.2% or more. A total content of $Y_2O_3$, $La_2O_3$, and $ZrO_2$ is preferably 0.5% or more, more preferably 1.0% or more, and still more preferably 1.5% or more. In order to lower a liquidus temperature and prevent devitrification, the total content thereof is preferably 6% or less, more preferably 5% or less, and still more preferably 4% or less.

In order to lower a devitrification temperature and prevent devitrification, a total content of $Y_2O_3$ and $La_2O_3$ is preferably larger than the content of $ZrO_2$, and a content of $Y_2O_3$ is more preferably larger than the content of $ZrO_2$.

$Y_2O_3$ is not essential, but the present glass preferably contains $Y_2O_3$ in order to reduce the crystal growth rate while increasing the surface compressive stress of the chemically strengthened glass.

When the present glass contains $Y_2O_3$, a content thereof is preferably 0.1% or more, more preferably 0.2% or more, still more preferably 0.5% or more, and particularly preferably 1% or more. On the other hand, if the content of $Y_2O_3$ is too large, it is difficult to enlarge the compressive stress layer during the chemical strengthening treatment. The content of $Y_2O_3$ is preferably 5% or less, more preferably 3% or less, still more preferably 2% or less, and particularly preferably 1.5% or less.

$La_2O_3$ is not essential, but the present glass may contain $La_2O_3$ for the same reason as $Y_2O_3$. When the present glass contains $La_2O_3$, a content thereof is preferably 0.1% or more, more preferably 0.2% or more, still more preferably 0.5% or more, and particularly preferably 0.8% or more. On the other hand, if $La_2O_3$ is too large, it is difficult to enlarge the compressive stress layer during the chemical strengthening treatment. The content of $La_2O_3$ is preferably 5% or less, more preferably 3% or less, still more preferably 2% or less, and particularly preferably 1.5% or less.

$TiO_2$ is a component for preventing solarization of a glass. The present glass may contain $TiO_2$. When the present glass contains $TiO_2$, a content thereof is preferably 0.02% or more, more preferably 0.03% or more, still more preferably 0.04% or more, particularly preferably 0.05% or more, and even still more preferably 0.06% or more. On the other hand, if the content of $TiO_2$ is more than 1%, devitrification is likely to occur, and the quality of the chemically strengthened glass may be deteriorated. The content of $TiO_2$ is preferably 1% or less, more preferably 0.5% or less, and still more preferably 0.25% or less.

$B_2O_3$ is not essential, but the present glass may contain $B_2O_3$ for a purpose of reducing brittleness of the glass and improving crack resistance, or for a purpose of improving meltability of the glass. When the present glass contains $B_2O_3$, a content thereof is preferably 0.5% or more, more preferably 1% or more, and still more preferably 2% or more. On the other hand, if the content of $B_2O_3$ is too large, acid resistance tends to deteriorate. The content of $B_2O_3$ is preferably 10% or less. The content of $B_2O_3$ is more preferably 6% or less, still more preferably 4% or less, and particularly preferably 2% or less. From the viewpoint of preventing a problem of striae occurring during melting, it is more preferable that the present glass does not substantially contain $B_2O_3$.

$P_2O_5$ is not essential, but the present glass may contain $P_2O_5$ for a purpose of enlarging the compressive stress layer during chemical strengthening. When the present glass contains $P_2O_5$, a content thereof is preferably 0.5% or more, more preferably 1% or more, and still more preferably 2% or more. Further, from the viewpoint of increasing acid resistance, the content of $P_2O_5$ is preferably 5% or less, more preferably 4% or less, and still more preferably 2% or less. From the viewpoint of preventing striae from occurring during melting, it is more preferable that the present glass does not substantially contain $P_2O_5$.

A total content of $B_2O_3$ and $P_2O_5$ is preferably 0% to 10%, more preferably 1% or more, and still more preferably 2% or more. The total content of $B_2O_3$ and $P_2O_5$ is more preferably 6% or less, and still more preferably 4% or less.

$Nb_2O_5$, $Ta_2O_5$, $Gd_2O_3$, and $CeO_2$ are components for preventing solarization of a glass and improving meltability. The present glass may contain at least one of $Nb_2O_5$, $Ta_2O_5$, $Gd_2O_3$, and $CeO_2$. When the present glass contains these components, a total content thereof is preferably 0.03% or more, more preferably 0.1% or more, still more preferably 0.5% or more, particularly preferably 0.8% or more, and even still more preferably 1% or more. On the other hand, if the content of these is too large, it is difficult to increase the compressive stress value during the chemical strengthening treatment, and thus, the total content is preferably 3% or less, more preferably 2% or less, still more preferably 1% or less, and particularly preferably 0.5% or less.

Since $Fe_2O_3$ absorbs heat rays, $Fe_2O_3$ has an effect of improving solubility of a glass. When the glass is mass-produced using a large melting furnace, the present glass preferably contains $Fe_2O_3$. In this case, a content thereof is preferably 0.002% or more, more preferably 0.005% or more, still more preferably 0.007% or more, and particularly preferably 0.01% or more in terms of weight% based on oxides. On the other hand, if $Fe_2O_3$ is excessively contained, coloration occurs, and thus the content thereof is preferably 0.3% or less, more preferably 0.04% or less, still more preferably 0.025% or less, and particularly preferably 0.015% or less in terms of weight% based on oxides, from the viewpoint of enhancing transparency of the glass.

Here, all iron oxides in the glass have been described as $Fe_2O_3$, but actually, Fe(III) in an oxidized state and Fe(II) in a reduced state are mixed generally. Among them, Fe(III) causes yellow coloring, Fe (II) causes blue coloring, and green coloring occurs in the glass depending on the balance therebetween.

Furthermore, the present glass may contain a coloring component as long as achievement of desired chemical strengthening properties is not inhibited. Preferable examples of the coloring component include $Co_3O_4$, $MnO_2$, $NiO$, $CuO$, $Cr_2O_3$, $V_2O_5$, $Bi_2O_3$, $SeO_2$, $CeO_2$, $Er_2O_3$, and $Nd_2O_3$.

A content of the coloring component is preferably 5% or less in total in terms of mole percentage based on oxides. If the content exceeds 5%, the glass may tend to be devitrified. The content of the coloring component is preferably 3% or less, and more preferably 1% or less. When it is desired to increase transmittance of the glass, it is preferable that these components are not substantially contained.

As a refining agent or the like during melting of the glass, the present glass may appropriately contain a sulfate, a chloride, a fluoride, or the like. The present glass preferably does not contain $As_2O_3$. When the present glass contains $Sb_2O_3$, a content thereof is preferably 0.3% or less, and more preferably 0.1% or less, and it is most preferable that $Sb_2O_3$ is not contained.

A fracture toughness value of the present glass is preferably 0.70 MPa·m$^{1/2}$ or more, more preferably 0.75 MPa·m$^{1/2}$ or more, still more preferably 0.80 MPa·m$^{1/2}$ or more, and particularly preferably 0.83 MPa·m$^{1/2}$ or more. The fracture toughness value is generally 2.0 MPa·m$^{1/2}$ or less, and typically 1.5 MPa·m$^{1/2}$ or less. In the case where the fracture toughness value is large, severe crushing is less likely to occur even when a large surface compressive stress is introduced into the glass by chemical strengthening.

The fracture toughness value can be measured using, for example, a DCDC method (Acta metall. mater. Vol. 43, pp. 3453-3458, 1995).

To make the glass harder to crush, a Young's modulus of the present glass is preferably 80 GPa or more, more preferably 82 GPa or more, still more preferably 84 GPa or more, and particularly preferably 85 GPa or more. An upper limit of the Young's modulus is not particularly limited, but a glass having a high Young's modulus may have low acid resistance, and thus the Young's modulus is, for example, preferably 110 GPa or less, more preferably 100 GPa or less, and still more preferably 90 GPa or less. The Young's modulus can be measured by, for example, an ultrasonic pulse method (JIS R1602: 1995).

An average linear thermal expansion coefficient (thermal expansion coefficient) at 50°C to 350°C of the present glass is preferably $95 \times 10^{-7}$/°C or less, more preferably $90 \times 10^{-7}$/°C or less, still more preferably $88 \times 10^{-7}$/°C or less, particularly preferably $86 \times 10^{-7}$/°C or less, and most preferably $84 \times 10^{-7}$/°C or less, from the viewpoint of reducing warpage after chemical strengthening. A lower limit of the thermal expansion coefficient is not particularly limited, but a glass having a small thermal expansion coefficient may be difficult to melt, and thus the average linear thermal expansion coefficient (thermal expansion coefficient) of the present glass at 50°C to 350°C is, for example, preferably $60 \times 10^{-7}$/°C or more, more preferably $70 \times 10^{-7}$/°C or more, still more preferably $74 \times 10^{-7}$/°C or more, and still more preferably $76 \times 10^{-7}$/°C or more.

A glass transition point (Tg) is preferably 500°C or higher, more preferably 520°C or higher, and still more preferably 540°C or higher, from the viewpoint of reducing warpage after chemical strengthening. From the viewpoint of facilitating float forming, the glass transition point is preferably 750°C or lower, more preferably 700°C or lower, still more preferably 650°C or lower, particularly preferably 600°C or lower, and most preferably 580°C or lower.

In the present glass, a DSC exothermic peak temperature measured by the following test method is preferably higher than the glass transition point by 150°C or higher.

That is, about 70 mg of glass is ground in an agate mortar and measured using a differential scanning calorimeter (DSC) from room temperature to 1200°C at a temperature rising rate of 10°C/min.

The DSC exothermic peak temperature is more preferably higher than Tg by 120°C or higher, and still more preferably higher than Tg by 150°C or higher. When the DSC exothermic peak temperature is equal to or higher than the above value, crystals are less likely to be formed when the glass is heated to be formed. Accordingly, for example, 3D forming of the glass is facilitated. The DSC exothermic peak temperature is generally (Tg + 300°C) or lower, and more preferably (Tg + 250°C) or lower.

A temperature (T2) at which a viscosity is $10^2$ dPa·s is preferably 1750°C or lower, more preferably 1730°C or lower, still more preferably 1700°C or lower, particularly preferably 1675°C or lower, and typically 1650°C or lower. The temperature (T2) is a temperature serving as an indication of a melting temperature of the glass, and the glass tends to be more easily produced as T2 is lower. A lower limit of T2 is not particularly limited, but a glass having a lower T2 tends to have an excessively low glass transition point, and thus T2 is generally 1400°C or higher, and preferably 1450°C or higher.

A temperature (T4) at which a viscosity is $10^4$ dPa·s is preferably 1350°C or lower, more preferably 1300°C or lower, still more preferably 1250°C or lower, and particularly preferably 1150°C or lower. The temperature (T4) is a temperature serving as an indication of a temperature at which the glass is formed into a sheet shape, and a glass having a higher T4 tends to have a higher load on forming equipment. A lower limit of T4 is not particularly limited, but a glass having a lower T4 tends to have an excessively low glass transition point, and thus T4 is generally 900°C or higher, preferably 950°C or higher, and more preferably 1000°C or higher.

A devitrification temperature of the present glass is preferably equal to or lower than a temperature which is higher than the temperature (T4) at which a viscosity is $10^4$ dPa s by 120°C because devitrification hardly occurs during forming by a float method. The devitrification temperature is more preferably equal to or lower than a temperature which is higher than T4 by 100°C, still more preferably equal to or lower than a temperature which is higher than T4 by 50°C, and particularly preferably T4 or lower. For example, when T4 is 1230°C, the devitrification temperature is preferably 1350°C or lower, more preferably 1330°C or lower, and still more preferably 1280°C or lower.

A devitrification growth rate of the present glass is preferably 10000 $\mu$m/h or less, and more preferably 8000 $\mu$m/h or less, from the viewpoint of ease of production. The devitrification growth rate refers to a growth rate of crystals generated by a devitrification phenomenon, and can be measured by, for example, a method described in Examples.

A softening point of the present glass is preferably 850°C or lower, more preferably 820°C or lower, and still more preferably 790°C or lower. This is because, as the softening point of the glass is lower, a heat treatment temperature in bending forming becomes lower, energy consumption becomes smaller, and a load on a facility becomes smaller. From the viewpoint of lowering a bending forming temperature, a lower softening point is more preferable, but the softening point is 700°C or higher for an ordinary glass. In a glass having an excessively low softening point, a stress introduced during the chemical strengthening treatment tends to relax, and thus the glass tends to have low strength. Accordingly, the softening point is preferably 700°C or higher. The softening point is more preferably 720°C or higher, and still more preferably 740°C or higher. The softening point can be measured by a fiber elongation method described in JIS R3103-1: 2001.

In the present glass, a crystallization peak temperature measured by the following measurement method is preferably higher than the softening point - 100°C. In addition, it is more preferable that no crystallization peak is observed.

That is, about 70 mg of glass is crushed, ground in an agate mortar, and measured using a differential scanning calorimeter (DSC) from room temperature to 1200°C at a temperature rising rate of 10°C/min.

In order to reduce a charge amount of the glass surface, a surface resistivity of the present glass at 50°C is preferably $10^{15}$ Q/sq or less, more preferably $10^{14.5}$ Q/sq or less, and still more preferably $10^{14}$ Q/sq or less. In addition, a glass having a smaller charge amount tends to have poor devitrification properties during production, the surface resistivity is preferably $10^8$ S2/sq or more, and more preferably $10^9$ Q/sq or more. As the surface resistivity is smaller, the conductivity of the glass tends to be better. A surface resistivity $\rho$ is determined as $\rho = R \times r$ based on a resistance value R and an electrode coefficient r, the resistance value R being determined as $R = V / I$ based on a current value I and a voltage V measured by forming an electrode on a surface of a glass sheet.

When the present glass is sheet-shaped (glass sheet), a sheet thickness (t) thereof is, for example, preferably 2000 $\mu$m or less, more preferably 1500 $\mu$m or less, still more preferably 1000 $\mu$m or less, yet still more preferably 900 $\mu$m or less, particularly preferably 800 $\mu$m or less, and most preferably 700 $\mu$m or less, from the viewpoint of enhancing an effect of chemical strengthening. In addition, the sheet thickness is, for example, preferably 100 $\mu$m or more, more preferably 200 $\mu$m or more, still more preferably 400 $\mu$m or more, and yet still more preferably 500 $\mu$m or more, from the viewpoint of obtaining a sufficient strength improvement effect by the chemical strengthening treatment.

A shape of the present glass may be a shape other than a sheet shape depending on a product, a use, or the like to which the present glass is applied. In addition, the glass sheet may have an edged shape in which the thicknesses of an outer periphery are different. A form of the glass sheet is not limited thereto, and for example, two main surfaces may not be parallel to each other, and all or a part of one or both of the two main surfaces may be curved surfaces. More specifically, the glass sheet may be, for example, a flat sheet-shaped glass sheet having no warpage or a curved glass sheet having a curved surface.

The glass according to the embodiment of the present invention can be produced by a general method. For example, raw materials of components of the glass are blended, and then heated and melted in a glass melting furnace. Thereafter, the glass is homogenized by a known method and formed into a desired shape such as a glass sheet, followed by being annealed.

Examples of methods for forming a glass sheet include a float method, a press method, a fusion method, and a down-draw method. In particular, a float method suitable for mass production is preferable. Further, a continuous forming method other than the float method, for example, a fusion method and a down-draw method are also preferable.

Thereafter, the formed glass is ground and polished as necessary to form a glass substrate. In a case where the glass substrate is cut into a predetermined shape and size or the glass substrate is chamfered, it is preferable to perform cutting or chamfering of the glass substrate before a chemical strengthening treatment to be described later is performed because a compressive stress layer is also formed on an end surface by the subsequent chemical strengthening treatment.

<Chemically Strengthened Glass>

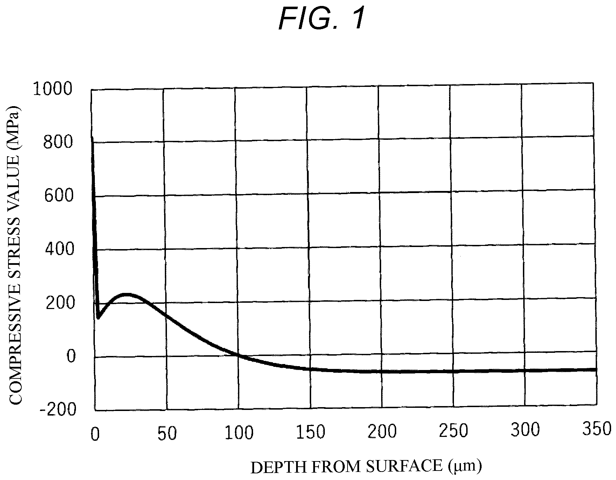

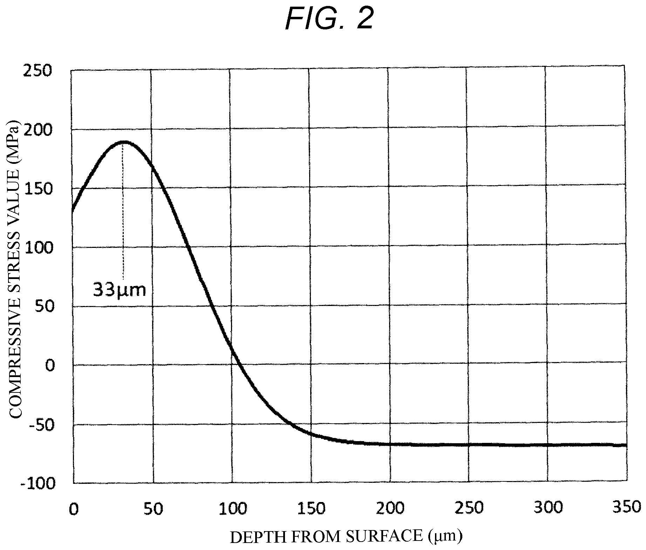

The base composition of the chemically strengthened glass according to the embodiment of the present invention (hereinafter, also abbreviated as the present chemically strengthened glass) is equal to the glass composition of the present glass described above. FIG. 1 and FIG. 2 show an example of a stress profile of the present chemically strengthened glass. FIG. 2 is a stress profile of an inside of the chemically strengthened glass measured using a scattered light photoelastic stress meter. Here, the term "inside" refers to, for example, a range having a depth of 30 $\mu$m or more from a surface.

In the present chemically strengthened glass, a surface compressive stress value $CS_0$ is preferably 400 MPa or more, more preferably 600 MPa or more, still more preferably 700 MPa or more, yet still more preferably 800 MPa or more, and particularly preferably 850 MPa or more.

The strength increases as the surface compressive stress value increases. However, if the surface compressive stress value is too large, a large tensile stress is generated inside the chemically strengthened glass, which may lead to breakage. Therefore, the surface compressive stress value $CS_0$ is preferably 1600 MPa or less, and more preferably 1500 MPa or less.

In the stress profile of the present chemically strengthened glass, a compressive stress value $CS_{50}$ at a depth of 50 $\mu$m from the surface is preferably 90 MPa or more, more preferably 110 MPa or more, still more preferably 130 MPa or more, yet still more preferably 140 MPa or more, particularly preferably 150 MPa or more, and most preferably 160 MPa or more. When $CS_{50}$ is larger, the chemically strengthened glass is less likely to break when receiving damage due to falling or the like. $CS_{50}$ is preferably 300 MPa or less, more preferably 250 MPa or less, and still more preferably 200 MPa or less, from the viewpoint of preventing a larger tensile stress which leads to breakage from occurring inside the chemically strengthened glass.

In the present chemically strengthened glass, a tensile stress value at a depth of 1/2 of the sheet thickness t of the glass, that is, an internal tensile stress value CT is preferably 70.6 MPa or less, more preferably 62.1 MPa or less, still more preferably 61.8 MPa or less, and still more preferably 56.9 MPa or less. When CT is smaller, crushing is less likely to occur. The internal tensile stress value CT is preferably 50 MPa or more, more preferably 53 MPa or more, and still more preferably 55 MPa or more. When the CT is equal to or greater than the above value, a compressive stress in a vicinity of the surface increases, and the strength increases.

In the present chemically strengthened glass, when a profile of a $Na_2O$ concentration is made in a depth direction from the surface toward a sheet thickness center, a depth at which the $Na_2O$ concentration is maximum is preferably 0.011 or more.

The depth at which the $Na_2O$ concentration is maximum is preferably 0.025t or more, more preferably 0.045t or more, still more preferably 0.055t or more, and particularly preferably 0.0625t or more. In a case of a general thickness, the depth is preferably 0.15t or less, more preferably 0.1t or less, and still more preferably 0.08t or less.

The depth at which the $Na_2O$ concentration is maximum is preferably 1 $\mu$m or more, more preferably 10 $\mu$m or more, and still more preferably 15 $\mu$m or more. In order to prevent breakage due to a strong impact, the depth is preferably 20 $\mu$m or more, more preferably 30 $\mu$m or more, and still more preferably 40 to 60 $\mu$m.

When the depth at which the $Na_2O$ concentration is maximum is within the above range, it is easy to obtain a glass having a large compressive stress inside the glass while reducing CT.

The depth at which the $Na_2O$ concentration is maximum is determined by a method for measuring a concentration distribution in a thickness direction of a cross section of the chemically strengthened glass with an electron probe microanalyzer (EPMA).

When a hopping frequency measured by the following method is preferably $10^{2.5}$ or more, more preferably $10^{3.0}$ or more, and still more preferably $10^{3.5}$ or more, the present chemically strengthened glass is hardly charged. A glass having an excessively high hopping frequency may have poor devitrification properties or lower fracture toughness. The hopping frequency is preferably $10^{6.0}$ or less, more preferably $10^{5.5}$ or less, and still more preferably $10^{5.0}$ or less.

(Method for measuring hopping frequency)

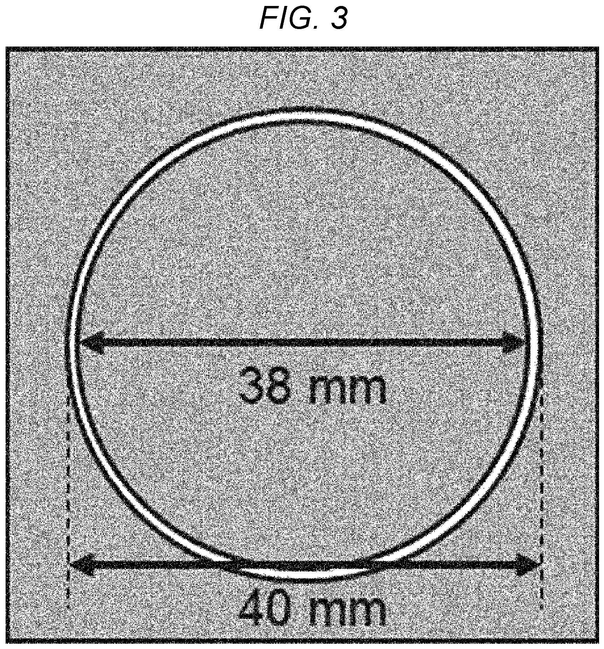

A glass sheet is processed into a sheet shape of 50 mm $\times$ 50 mm $\times$ 0.7 mm, and an electrode pattern shown in FIG. 3 is formed on one surface.

The impedance at 20 MHz to 2 MHz is measured using an impedance analyzer, and the complex admittance is determined.

When K = -11.214, n1 = 0.995, n2 = 0.576, and C∞ = 20.726, a hopping frequency ωp is calculated based on the following formula (13) (Almond-west formula) and the determined complex admittance.

The following formula (13) is known as a model formula regarding the complex admittance Y*(ω) with a frequency ω as a variable (Journal of Materials Science vol. 19, 1984: 3236-3248).

[Formula 1]

$$Y^*(\omega) = A_1\omega^{n_1} + A_2\omega^{n_2} + i(B_1\omega^{n_1} + B_2\omega^{n_2}) + i\omega C_\infty \qquad (13)$$

Here, $A_1$, $B_1$, $A_2$, and $B_2$ are as follows.

[Formula 2]

$$A_1 = K\omega_p^{1-n_1} \qquad (14)$$

$$B_1 = A_1 \tan(n_1\pi/2) \qquad (15)$$

$$A_2 = K\omega_p^{1-n_2} \qquad (16)$$

$$B_2 = A_2 \tan(n_2\pi/2) \qquad (17)$$

The present chemically strengthened glass can be produced by subjecting the present glass to a chemical strengthening treatment, followed by washing and drying. The preferred shape of the present chemically strengthened glass is the same as the preferred shape of the present glass, and the present chemically strengthened glass may be, for example, a flat sheet-shaped glass sheet having no warpage, or a curved glass sheet having a curved surface, or may have a shape other than a sheet shape. In the production of the present chemically strengthened glass, a flat sheet-shaped glass sheet may be subjected to a chemical strengthening treatment, or when the present chemically strengthened glass is a curved glass sheet, the curved glass sheet may be subjected to a chemical strengthening treatment. In addition, a glass having a shape other than a sheet shape may be subjected to a chemical strengthening treatment.

The chemical strengthening treatment can be performed by a known method. In the chemical strengthening treatment, a glass sheet is brought into contact with a melt of a metal salt (for example, potassium nitrate) containing metal ions having a larger ion radius by immersion or the like. Accordingly, metal ions having a smaller ion radius in the glass sheet are substituted with the metal ions having a larger ion radius. Here, the metal ions having a smaller ion radius are typically Na ions or Li ions. The metal ions having a larger ion radius are typically K ions or Na ions, and specifically K ions for Na ions and Na ions or K ions for Li ions.

The chemical strengthening treatment (ion exchange treatment) can be performed, for example, by immersing a glass sheet in a molten salt such as potassium nitrate heated to 360°C to 600°C for 0.1 to 500 hours. A heating temperature of the molten salt is preferably 375°C to 500°C, and an immersion time of the glass sheet in the molten salt is preferably 0.3 to 200 hours.

Examples of the molten salt for performing the chemical strengthening treatment include a nitrate, a sulfate, a carbonate, a chloride, and the like. Among them, examples of the nitrate include lithium nitrate, sodium nitrate, potassium nitrate, cesium nitrate, silver nitrate, and the like. Examples of the sulfate include lithium sulfate, sodium sulfate, potassium sulfate, cesium sulfate, silver sulfate, and the like. Examples of the carbonate include lithium carbonate, sodium carbonate, potassium carbonate, and the like. Examples of the chloride include lithium chloride, sodium chloride, potassium chloride, cesium chloride, silver chloride, and the like. One of these molten salts may be used alone, or a plurality thereof may be used in combination.

In the present embodiment, the treatment conditions of the chemical strengthening treatment may be appropriately selected in consideration of the properties and composition of the glass, the kind of the molten salt, chemical strengthening properties such as the surface compressive stress and the depth of the compressive stress layer desired for the chemically strengthened glass to be finally obtained, and the like.

In the present embodiment, the chemical strengthening treatment may be performed only once, or may be performed a plurality of times under two or more different conditions (multistage strengthening). Here, for example, a chemical strengthening treatment is performed under a condition in which DOL is large and CS is relatively small, as a first-stage chemical strengthening treatment. Thereafter, a chemical strengthening treatment is performed under a condition in which DOL is small and CS is relatively large, as a second-stage chemical strengthening treatment. In this case, an internal tensile stress area (St) can be reduced while increasing CS of an outermost surface of the chemically strengthened glass, and the internal tensile stress (CT) can be reduced to be low.

The present glass and the present chemically strengthened glass are particularly useful as cover glasses for use in mobile devices such as a mobile phone, a smartphone, a personal digital assistant (PDA), and a tablet terminal. Further, the present glass and the present chemically strengthened glass are also useful for applications which are not intended to be carried such as a cover glass of a display device such as a television (TV), a personal computer (PC), and a touch panel, an elevator wall surface, or a wall surface (full-screen display) of a construction such as a house and a building, a building material such as a window glass, a table top, an interior of an automobile, an airplane, or the like, and a cover glass thereof, or a casing having a curved surface shape that is not a sheet shape by bending or forming.

EXAMPLE

Hereinafter, the present invention will be described with reference to Examples, but the present invention is not limited thereto. Examples 1 to 13, 21 to 37, and 39 are Working Examples of the present glass, and Examples 14 to 20, 38, and 40 are Comparative Examples. For the measurement results in the table, "-" indicates that the evaluation is not performed.

(Preparation of Glass for Chemical Strengthening)

A glass sheet was produced by melting in a platinum crucible so that glass compositions in terms of mole percentage based on oxides shown in Tables 1 to 3 were obtained. Generally used glass raw materials such as an oxide, a hydroxide, a carbonate, and a nitrate were appropriately selected and weighed such that the glass has a weight of 1000 g. Next, the mixed raw materials were put into a platinum crucible, placed in a resistance heating electric furnace at 1500°C to 1700°C, melted for about 3 hours, defoamed, and homogenized. The obtained molten glass was poured into a mold member, held at a temperature of a glass transition point + 50°C for 1 hour, and then cooled to room temperature at a rate of 0.5°C/min to obtain a glass block. The obtained glass block was cut and ground, and finally both surfaces were mirror-finished to obtain a sheet-shaped glass (glass for chemical strengthening) having a length of 50 mm, a width of 50 mm, and a sheet thickness of 0.8 mm. In Tables 1 to 3, $R_2O$ means a total content of $Li_2O$, $K_2O$, and $Na_2O$.

Table 1

| (mol%) | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| $SiO_2$ | 59.0 | 56.0 | 56.0 | 56.0 | 66.0 | 63.8 | 62.0 | 63.0 | 62.0 | 66.0 | 64.0 | 63.0 | 70.0 |
| $Al_2O_3$ | 19.0 | 19.0 | 19.0 | 19.0 | 17.0 | 15.5 | 19.0 | 19.0 | 19.0 | 17.0 | 18.0 | 19.0 | 15.0 |
| $Li_2O$ | 14.0 | 14.0 | 14.0 | 14.0 | 13.0 | 11.0 | 15.0 | 13.0 | 14.0 | 12.0 | 13.0 | 13.0 | 11.0 |
| $Na_2O$ | 5.0 | 5.0 | 5.0 | 5.0 | 3.0 | 5.0 | 3.0 | 4.0 | 3.0 | 3.0 | 3.0 | 3.0 | 2.5 |
| $K_2O$ | 3.0 | 3.0 | 3.0 | 3.0 | 1.0 | 1.0 | 1.0 | 1.0 | 2.0 | 2.0 | 2.0 | 2.0 | 1.5 |
| $B_2O_3$ | 0.0 | 0.0 | 3.0 | 0.0 | 0.0 | 0.0 | 0.0 | 0.0 | 0.0 | 0.0 | 0.0 | 0.0 | 0.0 |
| $P_2O_5$ | 0.0 | 3.0 | 0.0 | 0.0 | 0.0 | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 | 0.0 | 0.0 | 0.0 | 0.0 | 0.0 |
| CaO | 0.0 | 0.0 | 0.0 | 0.0 | 0.0 | 0.0 | 0.0 | 0.0 | 0.0 | 0.0 | 0.0 | 0.0 | 0.0 |
| SrO | 0.0 | 0.0 | 0.0 | 0.0 | 0.0 | 0.0 | 0.0 | 0.0 | 0.0 | 0.0 | 0.0 | 0.0 | 0.0 |
| BaO | 0.0 | 0.0 | 0.0 | 0.0 | 0.0 | 0.0 | 0.0 | 0.0 | 0.0 | 0.0 | 0.0 | 0.0 | 0.0 |
| ZnO | 0.0 | 0.0 | 0.0 | 3.0 | 0.0 | 0.0 | 0.0 | 0.0 | 0.0 | 0.0 | 0.0 | 0.0 | 0.0 |

(continued)

| (mol%) | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| $TiO_2$ | 0.0 | 0.0 | 0.0 | 0.0 | 0.0 | 0.0 | 0.0 | 0.0 | 0.0 | 0.0 | 0.0 | 0.0 | 0.0 |
| $ZrO_2$ | 0.0 | 0.0 | 0.0 | 0.0 | 0.0 | 0.7 | 0.0 | 0.0 | 0.0 | 0.0 | 0.0 | 0.0 | 0.0 |
| $Y_2O_3$ | 0.0 | 0.0 | 0.0 | 0.0 | 0.0 | 3.0 | 0.0 | 0.0 | 0.0 | 0.0 | 0.0 | 0.0 | 0.0 |
| Parameter S | 0.27 | 0.39 | 0.39 | 0.39 | 0.29 | 0.35 | 0.21 | 0.25 | 0.22 | 0.35 | 0.34 | 0.34 | 0.33 |
| Parameter M | 10.9 | 7.8 | 8.1 | 8.4 | 14.2 | 13.6 | 15.6 | 14.9 | 10.7 | 9.3 | 10.0 | 9.4 | 10.0 |
| Parameter D | 1250 | 1256 | 1232 | 1211 | 1373 | 1220 | 1431 | 1493 | 1416 | 1358 | 1387 | 1471 | 1304 |
| Parameter E | 625 | 556 | 538 | 514 | 667 | 684 | 739 | 571 | 730 | 658 | 694 | 682 | 651 |
| $Li_2O/R_2O$ | 0.64 | 0.64 | 0.64 | 0.64 | 0.76 | 0.65 | 0.79 | 0.72 | 0.74 | 0.71 | 0.72 | 0.72 | 0.73 |
| $R_2O/Al_2O_3$ | 1.16 | 1.16 | 1.16 | 1.16 | 1.00 | 1.10 | 1.00 | 0.95 | 1.00 | 1.00 | 1.00 | 0.95 | 1.00 |

Table 2

| (mol%) | Ex. 14 | Ex. 15 | Ex. 16 | Ex. 17 | Ex. 18 | Ex. 19 | Ex. 20 | Ex. 21 | Ex. 22 | Ex. 23 | Ex. 24 | Ex. 25 | Ex. 26 | Ex. 27 |
|---|---|---|---|---|---|---|---|---|---|---|---|---|---|---|
| $SiO_2$ | 65.0 | 59.0 | 61.5 | 68.0 | 69.2 | 70.0 | 72.0 | 62.9 | 62.3 | 62.9 | 62.9 | 62.9 | 61.0 | 61.0 |
| $Al_2O_3$ | 16.0 | 19.0 | 17.0 | 13.0 | 12.4 | 7.5 | 14.0 | 19.0 | 19.0 | 19.0 | 19.0 | 19.0 | 20.0 | 19.0 |
| $Li_2O$ | 14.0 | 14.0 | 14.0 | 11.5 | 10.6 | 8.0 | 11.0 | 12.3 | 11.6 | 12.3 | 11.3 | 11.3 | 12.0 | 13.0 |
| $Na_2O$ | 5.0 | 5.0 | 7.0 | 4.75 | 4.7 | 5.3 | 2.0 | 2.8 | 2.7 | 2.8 | 2.8 | 3.8 | 3.0 | 3.0 |
| $K_2O$ | 0.0 | 0.0 | 0.5 | 0.0 | 1.2 | 1.0 | 1.0 | 1.9 | 1.8 | 1.9 | 2.9 | 1.9 | 3.0 | 3.0 |
| $B_2O_3$ | 0.0 | 0.0 | 0.0 | 0.0 | 0.0 | 0.0 | 0.0 | 0.0 | 0.0 | 0.0 | 0.0 | 0.0 | 0.0 | 0.0 |
| $P_2O_5$ | 0.0 | 3.0 | 0.0 | 0.0 | 0.0 | 0.0 | 0.0 | 0.0 | 0.0 | 0.0 | 0.0 | 0.0 | 0.0 | 0.0 |
| MgO | 0.0 | 0.0 | 0.0 | 0.0 | 0.1 | 7.0 | 0.0 | 0.6 | 1.6 | 0.0 | 0.6 | 0.6 | 0.6 | 0.6 |
| CaO | 0.0 | 0.0 | 0.0 | 0.2 | 0.13 | 0.2 | 0.0 | 0.0 | 0.1 | 0.0 | 0.05 | 0.05 | 0.05 | 0.0 |
| SrO | 0.0 | 0.0 | 0.0 | 0.0 | 0.0 | 0.0 | 0.0 | 0.0 | 0.0 | 0.0 | 0.0 | 0.0 | 0.0 | 0.0 |
| BaO | 0.0 | 0.0 | 0.0 | 0.0 | 0.0 | 0.0 | 0.0 | 0.0 | 0.0 | 0.0 | 0.0 | 0.0 | 0.0 | 0.0 |
| ZnO | 0.0 | 0.0 | 0.0 | 0.0 | 0.0 | 0.0 | 0.0 | 0.0 | 0.0 | 0.0 | 0.0 | 0.0 | 0.0 | 0.0 |
| $TiO_2$ | 0.0 | 0.0 | 0.0 | 0.12 | 0.12 | 0.04 | 0.0 | 0.11 | 0.11 | 0.11 | 0.0 | 0.12 | 0.12 | 0.12 |
| $ZrO_2$ | 0.0 | 0.0 | 0.0 | 0.5 | 0.3 | 1.0 | 0.0 | 0.3 | 0.6 | 0.3 | 0.3 | 0.3 | 0.3 | 0.3 |
| $Y_2O_3$ | 0.0 | 0.0 | 0.0 | 2.0 | 1.3 | 0.0 | 0.0 | 0.1 | 0.3 | 0.8 | 0.1 | 0.1 | 0.1 | 0.1 |
| Parameter S | 0.25 | 0.25 | 0.32 | 0.26 | 0.36 | 0.30 | 0.20 | 0.34 | 0.34 | 0.34 | 0.38 | 0.37 | 0.38 | 0.37 |
| Parameter M | 23.4 | 18.6 | 24.8 | 19.6 | 16.0 | 36.4 | 11.4 | 8.6 | 7.7 | 7.0 | 3.7 | 9.1 | 3.8 | 5.7 |
| Parameter D | 1208 | 1466 | 1161 | 1342 | 1262 | 2147 | 1279 | 1669 | 1884 | 1567 | 1654 | 1687 | 1588 | 1449 |
| Parameter E | 544 | 439 | 408 | 486 | 454 | -100 | 679 | 608 | 541 | 688 | 599 | 486 | 668 | 728 |
| $Li_2O/R_2O$ | 0.74 | 0.74 | 0.65 | 0.71 | 0.64 | 0.56 | 0.79 | 0.72 | 0.72 | 0.72 | 0.66 | 0.67 | 0.67 | 0.68 |
| $R_2O/Al_2O_3$ | 1.19 | 1.00 | 1.26 | 1.25 | 1.33 | 1.91 | 1.00 | 0.89 | 0.84 | 0.89 | 0.89 | 0.89 | 0.90 | 1.00 |

EP 4 180 400 A1

Table 3

| (mol%) | Ex. 28 | Ex. 29 | Ex. 30 | Ex. 31 | Ex. 32 | Ex. 33 | Ex. 34 | Ex. 35 | Ex. 36 | Ex. 37 | Ex. 38 | Ex. 39 | Ex. 40 |
|---|---|---|---|---|---|---|---|---|---|---|---|---|---|
| $SiO_2$ | 61.2 | 62.0 | 63.0 | 67.5 | 61.9 | 63.9 | 63.0 | 63.0 | 63.0 | 66.1 | 58.4 | 59.8 | 64.2 |
| $Al_2O_3$ | 19.0 | 19.0 | 18.0 | 14.7 | 19.0 | 19.0 | 17.0 | 17.0 | 17.0 | 15.7 | 19.0 | 19.0 | 16.0 |
| $Li_2O$ | 13.0 | 12.3 | 12.3 | 11.3 | 12.0 | 12.0 | 11.3 | 11.3 | 11.3 | 10.9 | 11.6 | 11.3 | 10.8 |
| $Na_2O$ | 4.0 | 2.8 | 2.8 | 3.9 | 4.0 | 2.0 | 2.8 | 2.8 | 2.8 | 3.8 | 7.0 | 5.7 | 5.1 |
| $K_2O$ | 2.0 | 2.9 | 2.9 | 1.6 | 2.0 | 2.0 | 2.9 | 2.9 | 2.9 | 2.0 | 0.0 | 1.2 | 0.0 |
| $B_2O_3$ | 0.0 | 0.0 | 0.0 | 0.0 | 0.0 | 0.0 | 0.0 | 0.0 | 0.0 | 0.0 | 0.0 | 0.0 | 0.0 |
| $P_2O_5$ | 0.0 | 0.0 | 0.0 | 0.0 | 0.0 | 0.0 | 2.0 | 0.0 | 0.0 | 0.0 | 0.0 | 0.0 | 0.0 |
| $MgO$ | 0.6 | 0.6 | 0.6 | 0.6 | 0.6 | 0.6 | 0.6 | 0.6 | 2.6 | 0.4 | 0.3 | 0.0 | 1.4 |
| $CaO$ | 0.0 | 0.05 | 0.05 | 0.05 | 0.05 | 0.05 | 0.05 | 0.05 | 0.05 | 0.1 | 0.0 | 0.2 | 0.2 |
| $SrO$ | 0.0 | 0.0 | 0.0 | 0.0 | 0.0 | 0.0 | 0.0 | 0.0 | 0.0 | 0.0 | 0.0 | 0.0 | 0.1 |
| $BaO$ | 0.0 | 0.0 | 0.0 | 0.0 | 0.0 | 0.0 | 0.0 | 0.0 | 0.0 | 0.0 | 0.1 | 0.0 | 0.1 |
| $ZnO$ | 0.0 | 0.0 | 0.0 | 0.0 | 0.0 | 0.0 | 0.0 | 0.0 | 0.0 | 0.0 | 0.0 | 0.0 | 0.0 |
| $TiO_2$ | 0.12 | 0.12 | 0.12 | 0.12 | 0.12 | 0.12 | 0.12 | 0.12 | 0.12 | 0.12 | 0.0 | 0.12 | 0.0 |
| $ZrO_2$ | 0.3 | 0.3 | 0.3 | 0.3 | 0.3 | 0.3 | 0.3 | 0.3 | 0.3 | 0.3 | 2.0 | 1.6 | 2.0 |
| $Y_2O_3$ | 0.1 | 0.1 | 0.1 | 0.1 | 0.1 | 0.1 | 0.1 | 2.1 | 0.1 | 0.7 | 1.6 | 1.1 | 0.0 |
| Parameter S | 0.36 | 0.37 | 0.37 | 0.36 | 0.37 | 0.32 | 0.38 | 0.38 | 0.38 | 0.38 | 0.29 | 0.36 | 0.27 |
| Parameter M | 11.0 | 4.9 | 5.4 | 12.7 | 10.0 | 6.2 | 2.7 | 8.6 | 13.5 | 9.7 | 2.6 | -1.7 | 1.9 |
| Parameter D | 1282 | 1504 | 1420 | 1307 | 1642 | 1738 | 1417 | 1656 | 1940 | 1437 | 700 | 1039 | 1009 |
| Parameter E | 725 | 701 | 713 | 542 | 501 | 645 | 619 | 676 | 461 | 538 | 801 | 690 | 626 |
| $Li_2O/R_2O$ | 0.68 | 0.68 | 0.68 | 0.67 | 0.67 | 0.75 | 0.66 | 0.66 | 0.66 | 0.65 | 0.62 | 0.62 | 0.68 |
| $R_2O/Al_2O_3$ | 1.00 | 0.95 | 1.00 | 1.14 | 0.95 | 0.84 | 1.00 | 1.00 | 1.00 | 1.07 | 0.98 | 0.96 | 1.00 |

The physical properties of the obtained glass for chemical strengthening were evaluated as follows. The results are shown in Tables 4 to 6. In Tables 4 to 6, numerical values in bold and italics are estimated values based on the glass composition.

<Density (d)>

Density measurement was performed by a hydrostatic weighing method (JIS Z8807: 2012 Methods of measuring density and specific gravity of solid). The unit is $g/cm^3$.

<Young's Modulus>

A Young's modulus (G) (unit: GPa) was measured by an ultrasonic pulse method (JIS R1602: 1995).

<Average Linear Thermal Expansion Coefficient $\alpha$ and Glass Transition Point (Tg)>

An average linear thermal expansion coefficient ($\alpha$) (unit: $10^{-7}/°C$) at a temperature of 50°C to 350°C and a glass transition point (°C) were measured in accordance with a method of JIS R3102: 1995 "Testing method for average linear thermal expansion of glass".

<T2, T4>

A temperature T2 (°C) at which a viscosity was $10^2$ dPa s and a temperature T4 (°C) at which a viscosity was $10^4$ dPa s were measured by a rotational viscometer (in accordance with ASTM C 965-96).

<Devitrification Growth Rate>

A growth rate of crystals generated by a devitrification phenomenon was measured by the following procedure.
Glass pieces were pulverized in a mortar and classified, and glass particles that passed through a mesh sieve with an opening of 3.35 mm but did not pass through a mesh sieve with an opening of 2.36 mm were washed with ion exchange water and dried, and the resulting product was used for a test.
One glass particle was placed on each concave portion of an elongated platinum cell having a large number of concave portions, held at 1350°C or higher for 15 minutes or longer, then taken out from the furnace, and heated in an electric furnace at 700°C to 1300°C until the surface of the glass particle was melted and smoothed.
Next, the glass was put into a temperature gradient furnace maintained at a predetermined temperature, subjected to a heat treatment for a certain period of time (w), and then taken out at room temperature and quenched. According to this method, it is possible to heat a large number of glass particles at the same time by placing an elongated container in the temperature gradient furnace.
The glass after the heat treatment was observed with a polarizing microscope (ECLIPSE LV100ND, manufactured by Nikon Corporation), and a diameter (L $\mu$m) of the largest crystal among the observed crystals was measured. Observation was performed under the conditions of 10x ocular lens, $5\times$ to $100\times$ objective lens, transmitted light, and polarized light observation. Since the crystals generated by devitrification can be considered to grow isotropically, the devitrification (crystal) growth rate is (L/2) / w [unit: $\mu$m/h].
However, as crystals to be measured, crystals not precipitated from an interface with the container were selected. This is because devitrification growth at a metal interface tends to be different from a general devitrification growth behavior occurring inside the glass or at a glass-atmosphere interface.

<Devitrification Temperature>

The pulverized glass particles were placed in a platinum dish and subjected to a heat treatment in an electric furnace controlled to a constant temperature for 17 hours. The glass after the heat treatment was observed with a polarizing microscope, and the devitrification temperature was estimated by a method for evaluating the presence or absence of devitrification. For example, "1000°C to 1025°C" in the table means that the glass was devitrified when subjected to the heat treatment at 1000°C, but was not devitrified by a treatment at 1025°C. In this case, the devitrification temperature is 1000°C or higher and less than 1025°C.

<DSC Peak Temperature>

A DSC peak temperature (°C) was measured by crushing about 70 mg of glass and grinding the glass in an agate mortar and using a differential scanning calorimeter (DSC) from room temperature to 1200°C at a temperature rising rate of 10°C/min.

<$CS_0(Na)$, $CS_{50}(Na)$, $CS_{90}(Na)$, $DOL(Na)$>

A glass having a sheet thickness of 700 μm was immersed in $NaNO_3$ at 380°C for 4 hours to perform chemical strengthening.

A surface compressive stress (value) (CS, DOL) of the obtained chemically strengthened glass was measured by a surface stress meter (surface stress meter FSM-6000 manufactured by Orihara Industrial Co., Ltd). The internal CS and DOL were measured using a scattered light photoelastic stress meter (SLP-1000 manufactured by Orihara Industrial Co., Ltd). $CS_0(Na)$, $CS_{50}(Na)$, $CS_{90}(Na)$, and $DOL(Na)$ of each glass are shown in the table.

<$CS_0(K)$, $DOL(K)$>

A glass having a sheet thickness of 700 μm was immersed in $KNO_3$ at 380°C for 4 hours to perform chemical strengthening.

CS and DOL of the obtained chemically strengthened glass were measured in the same manner as in a case of strengthening with $NaNO_3$. $CS_0(K)$ and $DOL(K)$ of each glass are shown in the table.

Table 4

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| d (g/cm³) | 2.44 | 2.42 | 2.43 | 2.52 | 2.41 | 2.62 | 2.43 | 2.43 | 2.42 | 2.40 | 2.41 | 2.41 | 2.38 |
| α (10⁻⁷/°C) | 92 | 92 | 94 | 95 | 71 | 78 | 77 | 76 | 80 | 75 | 76 | 76 | 68 |
| Tg (°C) | 567 | 601 | 583 | 697 | 680 | 682 | 667 | 680 | 669 | 670 | 663 | 685 | 692 |
| G (GPa) | 85 | 81 | 82 | 88 | 86 | 93 | 88 | 87 | 87 | 85 | 86 | 87 | 84 |
| T2 (°C) | 1606 | 1539 | 1560 | 1528 | 1718 | 1635 | 1655 | 1701 | 1675 | 1738 | 1706 | 1657 | 1786 |
| T4 (°C) | 1141 | 1094 | 1092 | 1087 | 1229 | 1188 | 1184 | 1224 | 1201 | 1246 | 1224 | 1255 | 1278 |
| Fracture Toughness Value (MPa·m$^{1/2}$) | 0.77 | 0.74 | 0.75 | 0.77 | 0.81 | 0.83 | 0.81 | 0.80 | 0.80 | 0.80 | 0.80 | 0.80 | 0.81 |
| Devitrification Growth Rate (μm/hour) | 2948 | 4748 | 4748 | 4748 | 5266 | 2731 | 6205 | 5143 | 5042 | 4102 | 4572 | 4803 | 4156 |
| Devitrification Temperature (°C) | 1225-1250°C | 1175-1200°C | 1175-1200°C | 1200°C or higher | 1325-1350°C | 1325-1350°C | - | 1275-1300°C | 1300-1325°C | 1275-1300°C | 1300-1325°C | 1275-1300°C | 1300-1325°C |
| DSC Peak Temperature (°C) | 826 | 766 | - | 799 | 878 | 893 | 843 | 857 | 848 | 863 | 855 | 872 | 873 |
| Heat Quantity of DSC Peak (mcal/s) | - | - | - | - | 4.41 | 4.31 | - | - | - | - | - | - | - |
| DSC Peak Temperature - Tg (°C) | 259 | 165 | - | 102 | 198 | 210 | 176 | 178 | 179 | 193 | 192 | 187 | 181 |
| CS$_0$(Na) (MPa) | 605 | 528 | - | - | 650 | 655 | 724 | 542 | 679 | 620 | 586 | 618 | 429 |

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| $CS_0(K)$ (MPa) | 1243 | 1247 | - | - | 1365 | 1207 | 1424 | 1481 | 1394 | 1330 | 1366 | 1406 | 1260 |
| $DOL(Na)$ / $DOL(K)$ | 10.2 | 7.7 | - | - | 12.4 | 13.4 | 15.3 | 14.1 | 10.5 | 11.8 | 14.3 | 14.5 | 9.7 |
| $CS_{50}(Na)$ (MPa) | 207 | 242 | - | - | 261 | 200 | 339 | 280 | 283 | 211 | 260 | 265 | 220 |
| $CS_{90}(Na)$ (MPa) | 11 | 67 | - | - | 82 | 44 | 95 | 102 | 51 | 55 | 65 | 59 | - |
| $DOL(Na)$ ($\mu$m) | 94 | 112 | - | - | 114 | 93 | 111 | 120 | 102 | 111 | 109 | 106 | 121 |
| $DOL(K)$ ($\mu$m) | 9.2 | 14.4 | - | - | 9.2 | 6.9 | 7.2 | 8.5 | 9.7 | 9.4 | 7.6 | 7.3 | 12.4 |

Table 5

| | Ex. 14 | Ex. 15 | Ex. 16 | Ex. 17 | Ex. 18 | Ex. 19 | Ex. 20 | Ex. 21 | Ex. 22 | Ex. 23 | Ex. 24 | Ex. 25 | Ex. 26 | Ex. 27 |
|---|---|---|---|---|---|---|---|---|---|---|---|---|---|---|
| d (g/cm³) | 2.42 | 2.42 | 2.44 | 2.54 | 2.48 | 2.44 | 2.37 | 2.44 | 2.46 | 2.47 | 2.43 | 2.43 | 2.44 | 2.45 |
| $\alpha$ ($10^{-7}$/°C) | 78 | 77 | 88 | 72 | 74 | 72 | 62 | 74 | 71 | 74 | 76 | 75 | 79 | 82 |
| Tg (°C) | 619 | 660 | 590 | 637 | 595 | 548 | 669 | 691 | 701 | 699 | 682 | 687 | 698 | 668 |
| G (GPa) | 86 | 84 | 86 | 90 | 85 | 83 | 83 | 88 | 89 | 89 | 86 | 87 | 87 | 87 |
| T2 (°C) | 1641 | 1589 | 1585 | 1653 | 1672 | 1629 | 1802 | 1720 | 1718 | 1717 | 1663 | 1657 | 1634 | 1674 |
| T4 (°C) | 1156 | 1136 | 1112 | 1179 | 1203 | 1159 | 1287 | 1251 | 1265 | 1249 | 1263 | 1258 | 1241 | 1211 |
| Fracture Toughness Value (MPa·m$^{1/2}$) | 0.81 | 0.78 | 0.79 | 0.84 | 0.81 | 0.79 | 0.82 | 0.80 | 0.80 | 0.81 | 0.79 | 0.79 | 0.78 | 0.78 |
| Devitrification Growth Rate (μm/hour) | 5028 | 7522 | 3628 | 3673 | 2394 | 80 | 4680 | 4640 | 4345 | 4702 | 3477 | 3848 | 3620 | 3628 |
| Devitrification Temperature (°C) | 1275-1300°C | 1287 | 1200-1225°C | 1275-1300°C | 1220-1230°C | 1190-1100°C | - | - | - | - | 1250-1275°C | 1259-1275 | 1275-1300 | 1250-1275 |
| DSC Peak Temperature (°C) | 834 | 785 | 819 | 836 | 799 | 834 | 877 | 860 | 858 | 887 | 867 | 863 | 857 | 842 |
| Heat Quantity of DSC Peak (mcal/s) | - | - | - | 13.65 | 8.09 | 0.494 | - | - | - | - | - | - | - | - |
| DSC Peak Temperature - Tg (°C) | 215 | 125 | 229 | 199 | 204 | 286 | 208 | 169 | 157 | 188 | 185 | 176 | 159 | 175 |
| CS$_0$(Na) (MPa) | 508 | 411 | 379 | 457 | 447 | -129 | 648 | 569 | 588 | 559 | 515 | 490 | 520 | 700 |
| CS$_0$(K) (MPa) | 1192 | 1456 | 1150 | 1328 | 1207 | 2134 | 1264 | 1461 | 1541 | 1476 | 1395 | 1490 | 1445 | 1437 |
| DOL(Na) / DOL(K) | 24.3 | 14.2 | 30.1 | 53.6 | 15.6 | 18.1 | 9.4 | 16.2 | 12.7 | 16.2 | 10.9 | 11.7 | 13.4 | 7.9 |

(continued)

| | Ex. 14 | Ex. 15 | Ex. 16 | Ex. 17 | Ex. 18 | Ex. 19 | Ex. 20 | Ex. 21 | Ex. 22 | Ex. 23 | Ex. 24 | Ex. 25 | Ex. 26 | Ex. 27 |
|---|---|---|---|---|---|---|---|---|---|---|---|---|---|---|
| $CS_{50}(Na)$ (MPa) | 270 | - | - | - | 168 | - | - | 206 | 166 | 203 | 170 | 210 | 195 | - |
| $CS_{90}(Na)$ (MPa) | 109 | - | - | - | 20 | - | - | 15 | -18 | 15 | 0.9 | 46 | 22 | - |
| DOL(Na) (pm) | 126 | *149* | *126* | *104* | 98 | *77* | *113* | 94 | 84 | 94 | 90 | 105 | 97 | *89* |
| DOL(K) (μm) | 5.2 | *10.5* | *4.2* | *1.9* | 6.3 | *4.2* | *12.0* | 5.8 | 6.6 | 5.8 | 8.2 | 8.9 | 7.2 | *11* |

Table 6

| | Ex. 28 | Ex. 29 | Ex. 30 | Ex. 31 | Ex. 32 | Ex. 33 | Ex. 34 | Ex. 35 | Ex. 36 | Ex. 37 | Ex. 38 | Ex. 39 | Ex. 40 |
|---|---|---|---|---|---|---|---|---|---|---|---|---|---|
| d (g/cm³) | 2.46 | 2.44 | 2.44 | 2.42 | 2.43 | 2.43 | 2.41 | 2.55 | 2.44 | 2.45 | 2.61 | 2.55 | 2.49 |
| $\alpha$ (10⁻⁷/°C) | 81 | 78 | 78 | 73 | 78 | 70 | 75 | 78 | 77 | 75 | 81 | 80 | 70 |
| Tg (°C) | 691 | 684 | 668 | 630 | 670 | 705 | 662 | 695 | 660 | 649 | 675 | 672 | 641 |
| G (GPa) | 88 | 87 | 86 | 84 | 87 | 88 | 82 | 90 | 86 | 83 | 94 | 91 | 89 |
| T2 (°C) | 1668 | 1706 | 1701 | 1714 | 1698 | 1751 | 1688 | 1676 | 1687 | 1714 | 1605 | 1652 | 1681 |
| T4 (°C) | 1205 | 1239 | 1230 | 1224 | 1232 | 1277 | 1220 | 1221 | 1227 | 1233 | 1190 | 1219 | 1237 |
| Fracture Toughness Value (MPa·m$^{1/2}$) | 0.79 | 0.79 | 0.79 | 0.80 | 0.79 | 0.80 | 0.77 | 0.81 | 0.78 | 0.79 | 0.81 | 0.80 | 0.81 |
| Devitrification Growth Rate (μm/hour) | 3847 | 3655 | 3424 | 3075 | 3809 | 4978 | 4168 | 3037 | 2864 | 2905 | 2235 | 2337 | 2539 |
| Devitrification Temperature (°C) | 1250-1275 | - | - | - | - | - | - | - | - | 1200-1250°C | 1350°C or higher | 1350°C or higher | 1350°C or higher |
| DSC Peak Temperature (°C) | 838 | 852 | 849 | 847 | 852 | 867 | 817 | 890 | 860 | 855 | 942 | 852 | 856 |
| Heat Quantity of DSC Peak (mcal/s) | - | - | - | - | - | - | - | - | - | - | - | - | - |
| DSC Peak Temperature - Tg (°C) | 147 | 169 | 181 | 217 | 182 | 162 | 155 | 196 | 199 | 206 | 268 | 179 | 215 |
| CS$_0$(Na) (MPa) | 697 | 673 | 685 | 478 | 534 | 617 | 589 | 648 | 433 | 507 | 774 | 662 | 598 |
| CS$_0$(K) (MPa) | 1271 | 1492 | 1408 | 1448 | 1465 | 1725 | 1405 | 1643 | 1927 | 1263 | 689 | 1027 | 996 |
| DOL(Na) / DOL(K) | 9.0 | 7.7 | 7.6 | 16.5 | 16.0 | 9.9 | 6.4 | 6.7 | 7.4 | 27.8 | 25.8 | 23.4 | 36.1 |
| CS$_{50}$(Na) (MPa) | - | - | - | 206 | 240 | - | - | - | - | 176 | - | - | - |
| CS$_{90}$(Na) (MPa) | - | - | - | 46 | 63 | - | - | - | - | - | - | - | - |
| DOL(Na) (μm) | 107 | 92 | 91 | 95 | 107 | 100 | 104 | 68 | 78 | 100 | 140 | 123 | 139 |
| DOL(K) (μm) | 12 | 12 | 12 | 5.8 | 6.7 | 10 | 16 | 10 | 11 | 4 | 5 | 5 | 4 |

<Chemical Strengthening Properties>

A glass of Example 9 was chemically strengthened in two stages as follows. That is, as a first-stage chemical strengthening treatment, the glass was immersed in a molten salt containing 70 wt% of $KNO_3$ and 30 wt% of $NaNO_3$ at 380°C for 90 minutes. As a second-stage strengthening treatment, the glass was immersed in a molten salt containing 99 wt% of $KNO_3$ and 1 wt% of $LiNO_3$ at 380°C for 40 minutes.

A compressive stress value of a surface layer of the obtained chemically strengthened glass was measured using a surface stress meter (FSM-6000). The internal CS and DOL were measured using a scattered light photoelastic stress meter (SLP-1000).

The obtained chemically strengthened glass had $CS_0$ of 818 MPa, $CS_{50}$ of 169 MPa, and CT of 61.9 MPa. AK ion exchange depth was 3.3 $\mu$m, and DOL was 104 $\mu$m.

FIG. 1 shows a stress profile of the obtained chemically strengthened glass. FIG. 2 shows a stress profile of an inside of the chemically strengthened glass measured using a scattered light photoelastic stress meter (SLP-1000). Here, the term "inside" refers to a range having a depth of 30 $\mu$m or more from a surface.

From FIG. 2, a peak of the compressive stress due to the diffusion of Na ions can be confirmed in the vicinity of a depth of 33 $\mu$m from the surface of the glass. From this, since the depth at which the $Na_2O$ concentration is maximum is 1 $\mu$m or more, the depth at which the $Na_2O$ concentration is maximum is considered to be 1 $\mu$m or more even when the profile of the $Na_2O$ concentration is taken in the depth direction from the surface of the glass toward the sheet thickness center.

In the glass of the Working Examples, since the parameter M is within a preferable range, a value of DOL(Na) / DOL(K) is smaller. Accordingly, the diffusion rate of potassium ions during chemical strengthening is relatively higher than the diffusion rate of sodium ions. Therefore, by a relatively simple strengthening treatment, a chemically strengthened glass was obtained in which the CS of the compressive stress layer due to the diffusion of Na ions in the vicinity of a depth of 50 $\mu$m from the surface and the DOL and CS of the compressive stress layer due to the diffusion of K ions in the surface layer were larger, and CT was reduced, as shown in FIG. 1.

On the other hand, since the glass of the comparative examples has a larger value of DOL(Na) / DOL(K) as in the related art, it is considered that it is difficult to obtain a complicated stress profile as described above by a simple strengthening treatment. Alternatively, in the glass of the comparative examples, since the amounts of Li and Al necessary for obtaining the compressive stress of the inside and the surface layer were insufficient, the compressive stress was low.

Although the present invention has been described in detail with reference to specific embodiments, it is apparent to those skilled in the art that various changes and modifications can be made without departing from the spirit and scope of the present invention. The present application is based on a Japanese Patent Application (No. 2020-119445) filed on July 10, 2020, the contents of which are incorporated herein by reference.

**Claims**

1. A glass comprising, in terms of mole percentage based on oxides:

   52% to 70% of $SiO_2$;
   14% to 25% of $Al_2O_3$;
   10% to 18% of $Li_2O$;
   1% to 7% of $Na_2O$;
   0.1% to 5% of $K_2O$;
   0% to 10% of $B_2O_3$;
   0% to 5% of $P_2O_5$;
   0% to 5% of MgO;
   0% to 5% of ZnO;
   0% to 2% of $ZrO_2$; and
   0% to 5% of $Y_2O_3$,
   wherein a parameter M is 20 or less, the parameter M being determined by the following formula,

$$M = -1.15 \times [SiO_2] - 1.73 \times [Al_2O_3] + 0.155 \times [Li_2O] + 0.74 \times [Na_2O] - 4.75 \times [K_2O] - 2.1 \times [B_2O_3] - 2.17 \times [P_2O_5] + 3.25 \times [MgO] - 2.0 \times [ZnO] - 13.3 \times [ZrO_2] - 0.80 \times [Y_2O_3] + 120$$

provided that [SiO$_2$], [Al$_2$O$_3$], [Li$_2$O], [Na$_2$O], [K$_2$O], [B$_2$O$_3$], [P$_2$O$_5$], [MgO], [ZnO], [ZrO$_2$], and [Y$_2$O$_3$] are contents, in terms of mole percentage, of SiO$_2$, Al$_2$O$_3$, Li$_2$O, Na$_2$O, K$_2$O, B$_2$O$_3$, P$_2$O$_5$, MgO, ZnO, ZrO$_2$, and Y$_2$O$_3$, respectively.

2. The glass according to claim 1, wherein a parameter D is 1200 or more, the parameter D being determined by the following formula based on the [SiO$_2$], [Al$_2$O$_3$], [Li$_2$O], [Na$_2$O], [K$_2$O], [B$_2$O$_3$], [P$_2$O$_5$], [MgO], [ZnO], [ZrO$_2$], and [Y$_2$O$_3$],

$$D = -943 \times [SiO_2] - 859 \times [Al_2O_3] - 998 \times [Li_2O] - 991 \times [Na_2O] - 1013 \times [K_2O] -$$
$$949 \times [B_2O_3] - 941 \times [P_2O_5] - 687 \times [MgO] - 956 \times [ZnO] - 1516 \times [ZrO_2] - 823 \times [Y_2O_3] +$$
$$95174.$$

3. The glass according to claim 1 or 2, wherein a parameter E is 500 or more, the parameter E being determined by the following formula based on the [SiO$_2$], [Al$_2$O$_3$], [Li$_2$O], [Na$_2$O], [K$_2$O], [B$_2$O$_3$], [P$_2$O$_5$], [MgO], [ZnO], [ZrO$_2$], and [Y$_2$O$_3$],

$$E = 539 \times [SiO_2] + 527 \times [Al_2O_3] + 587 \times [Li_2O] + 467 \times [Na_2O] + 578 \times [K_2O] +$$
$$510 \times [B_2O_3] + 516 \times [P_2O_5] + 442 \times [MgO] + 502 \times [ZnO] + 850 \times [ZrO_2] + 546 \times [Y_2O_3] -$$
$$53476.$$

4. A glass comprising, in terms of mole percentage based on oxides:

   52% to 70% of SiO$_2$;
   14% to 25% of Al$_2$O$_3$;
   10% to 18% of Li$_2$O;
   1% to 7% of Na$_2$O; and
   0.1% to 5% of K$_2$O,
   wherein a surface compressive stress value CS$_0$(Na) generated when the glass having a sheet thickness of 700 $\mu$m is immersed in NaNO$_3$ at 380°C for 4 hours is 500 MPa or more,
   a surface compressive stress value CS$_0$(K) generated when the glass having a sheet thickness of 700 $\mu$m is immersed in KNO$_3$ at 380°C for 4 hours is 1200 MPa or more,
   a depth of a compressive stress layer DOL(K) generated when the glass having a sheet thickness of 700 $\mu$m is immersed in KNO$_3$ at 380°C for 4 hours is 3 $\mu$m or more, and
   a ratio DOL(Na) / DOL(K) of a depth of a compressive stress layer DOL(Na) generated when the glass having a sheet thickness of 700 $\mu$m is immersed in NaNO$_3$ at 380°C for 4 hours to the DOL(K) is 35 or less.

5. The glass according to claim 4, wherein a compressive stress value CS$_{50}$(Na) at a depth of 50 $\mu$m from a surface is 170 MPa or more, the compressive stress value CS$_{50}$(Na) being generated when the glass having a sheet thickness of 700 $\mu$m is immersed in NaNO$_3$ at 380°C for 4 hours.

6. The glass according to any one of claims 1 to 5, having a devitrification temperature of 1350°C or lower.

7. The glass according to any one of claims 1 to 6, having a temperature T2 at which a viscosity of the glass is 10$^2$ dPa s of 1750°C or lower.

8. The glass according to any one of claims 1 to 7, having a DSC exothermic peak temperature measured by the following test method being higher than a glass transition point by 150°C or more,
   Test Method:
   About 70 mg of glass is crushed, ground in an agate mortar, and measured using a differential scanning calorimeter (DSC) from room temperature to 1200°C at a temperature rising rate of 10°C/min.

9. The glass according to any one of claims 1 to 8, wherein a value of S determined by the following formula is 0.4 or less,

$$S = -P_{Li} \times \log(P_{Li}) - P_{Na} \times \log(P_{Na}) - P_K \times \log(P_K)$$

in which, $P_{Li}$ = [Li$_2$O] / ([Li$_2$O] + [Na$_2$O] + [K$_2$O]),
$P_{Na}$ = [Na$_2$O] / ([Li$_2$O] + [Na$_2$O] + [K$_2$O]), and
$P_K$ = [K$_2$O] / ([Li$_2$O] + [Na$_2$O] + [K$_2$O]),
provided that [Li$_2$O], [Na$_2$O], and [K$_2$O] are contents, in terms of mole percentage, of Li$_2$O, Na$_2$O, and K$_2$O, respectively.

10. A chemically strengthened glass having a surface compressive stress value of 400 MPa or more,

wherein, when a profile of a Na$_2$O concentration is made in a depth direction from a surface toward a sheet thickness center, a depth at which the Na$_2$O concentration is maximum is 1 $\mu$m or more, and
a base composition of the chemically strengthened glass comprises, in terms of mole percentage based on oxides:

52% to 70% of SiO$_2$;
14% to 25% of Al$_2$O$_3$;
10% to 18% of Li$_2$O;
1% to 7% of Na$_2$O; and
0.1% to 5% of K$_2$O.

11. The chemically strengthened glass according to claim 10, having a compressive stress value $CS_{50}$ at a depth of 50 $\mu$m from a surface of 90 MPa or more.

12. The chemically strengthened glass according to claim 10 or 11, having an internal tensile stress value CT of 70.6 MPa or less.

13. The chemically strengthened glass according to any one of claims 10 to 12, having a surface compressive stress value $CS_0$ of 800 MPa or more.

14. The chemically strengthened glass according to any one of claims 10 to 13, having a hopping frequency of $10^{2.5}$ or more.

## FIG. 1

## FIG. 2

## FIG. 3

| | INTERNATIONAL SEARCH REPORT | International application No. |
|---|---|---|
| | | PCT/JP2021/025375 |

**A.  CLASSIFICATION OF SUBJECT MATTER**
C03C 3/083(2006.01)i; C03C 3/085(2006.01)i; C03C 3/091(2006.01)i; C03C 3/093(2006.01)i; C03C 3/095(2006.01)i; C03C 3/097(2006.01)i; C03C 21/00(2006.01)i
FI:     C03C3/083; C03C3/085; C03C3/091; C03C3/093; C03C3/095; C03C3/097; C03C21/00 101

According to International Patent Classification (IPC) or to both national classification and IPC

**B.  FIELDS SEARCHED**

Minimum documentation searched (classification system followed by classification symbols)
C03C1/00-14/00; C03C21/00

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)
INTERGLAD

**C.  DOCUMENTS CONSIDERED TO BE RELEVANT**

| Category* | Citation of document, with indication, where appropriate, of the relevant passages | Relevant to claim No. |
|---|---|---|
| X<br>A | WO 2019/159981 A1 (AGC INC.) 22 August 2019 (2019-08-22) paragraphs [0125], [0131] | 1, 3, 6-14<br>2, 4-5 |
| X<br>A | WO 2019/194110 A1 (AGC INC.) 10 October 2019 (2019-10-10) paragraphs [0081], [0087], [0089], [0091] | 1-2, 6-14<br>3-5 |
| X<br>A | JP 2009-280478 A (ASAHI GLASS CO., LTD.) 03 December 2009 (2009-12-03) paragraphs [0011], [0050] | 1-2, 6-8<br>3-5, 9-14 |

☐  Further documents are listed in the continuation of Box C.   ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 August 2021 (31.08.2021) | 07 September 2021 (07.09.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**
Information on patent family members

| | | International application No. |
|---|---|---|
| | | PCT/JP2021/025375 |

| Patent Documents referred in the Report | Publication Date | Patent Family | Publication Date |
|---|---|---|---|
| WO 2019/159981 A1 | 22 Aug. 2019 | CN 111727177 A | |
| WO 2019/194110 A1 | 10 Oct. 2019 | US 2021/0009462 A1 paragraphs [0136], [0151]-[0153], tables 2, 4 CN 111954647 A KR 10-2020-0139156 A | |
| JP 2009-280478 A | 03 Dec. 2009 | US 2009/0110963 A1 paragraphs [0017]-[0019], table 3 DE 102008053173 A1 CN 101417861 A KR 10-2009-0042732 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150259244 A
- JP 2013520388 T

- JP 2019517985 T
- JP 2020119445 A

**Non-patent literature cited in the description**

- *Acta metall. mater.,* 1995, vol. 43, 3453-3458

- *Journal of Materials Science,* 1984, vol. 19, 3236-3248